# EUROPÄISCHE PATENTSCHRIFT

(11) **EP 0 828 773 B1**
(45) Veröffentlichungstag und Bekanntmachung des Hinweises auf die Patenterteilung: **18.08.1999**
(21) Anmeldenummer: 96916158.7
(22) Anmeldetag: 23.05.1996
(51) Int. Cl.: C08F 297/04, C08G 81/02, C08L 71/12

(54) **FUNKTIONALISIERTE COPOLYMERE, VERFAHREN ZU IHRER HERSTELLUNG, DIESE ENTHALTENDE FORMMASSEN UND FORMKÖRPER**
FUNCTIONALISED COPOLYMERS, PROCESS FOR THEIR PRODUCTION, MOULDING COMPOUNDS CONTAINING THEM AND MOULDINGS
COPOLYMERES FONCTIONNALISES, PROCEDE DE FABRICATION ASSOCIE, MATIERES MOULABLES ET PRODUITS MOULES

(30) Priorität: 31.05.1995 DE 19519855
(43) Veröffentlichungstag der Anmeldung: 18.03.1998
(73) Patentinhaber: BASF AKTIENGESELLSCHAFT, 67056 Ludwigshafen (DE)
(72) Erfinder: GOTTSCHALK, Axel, D-67435 Neustadt (DE); ENGELHARDT, Ralf, D-67059 Ludwigshafen (DE); KOCH, Jürgen, D-67141 Neuhofen (DE); WEISS, Robert, D-67281 Kirchheim (DE)
(74) Vertreter: Isenbruck, Günter, Dr.
(86) Internationale Anmeldenummer: EP9602229
(87) Internationale Veröffentlichungsnummer: WO9638489

(56) Entgegenhaltungen:
- EP-A- 0 255 001
- EP-A- 0 440 939
- EP-A- 0 629 676
- DE-A- 4 129 499

## Beschreibung

Die Erfindung betrifft ein funktionalisiertes Copolymer der Formel

A―B―Z―X

wobei
- A: einen Block aus vinylaromatischen Monomeren mit 8 bis 20, vorzugsweise 8 bis 12 Kohlenstoffatomen,
- B: einen Block aus Alkadien-Monomeren mit 4 bis 12, vorzugsweise 4 bis 8 Kohlenstoffatomen,
- Z: einen Grundbaustein einer Verbindung mit sterisch hindernden Gruppen und
- X: einen funktionalisierten Grundbaustein
bedeutet.

In Inhapak, J.W. Barlow, und Paul "Terminal Anhydride Functionalization of Polystyrene, J. of Polymer Science, Part A, Polymer Chemistry, Bd. 29, S. 1329 - 1338 (1993) ist die Herstellung von terminal anhydrid-funktionalisiertem Polystyrol beschrieben. Dabei wird Styrol anionisch polymerisiert und das gebildete Polystyryllithium direkt mit Trimellitsäureanhydridchlorid (TMAC) am Ende der anionischen Polymerisation von Styrol gekoppelt. Der Funktionalisierungsgrad des Polymers beträgt maximal 61% bei dieser direkten Funktionalisierung. Mit TMAC funktionalisierte Polystyrole wurden ebenfalls erhalten durch Umsetzung von hydroxi-terminiertem Polystyrol und TMAC. Bei dieser Umsetzung zur indirekten Funktionalisierung werden Funktionalisierungsgrade bis zu 85 % erreicht. Die Durchführbarkeit dieses Verfahrens hängt jedoch von der Verfügbarkeit von hydroxi-terminiertem Polymer ab, das durch anionische Polymerisation und anschließende Umsetzung mit Ethylenoxid am Ende der Polymerisation zugänglich ist (R.P. Quirk und J.-J. Ma, J. Polym. Sci. Polym. Chem. Ed. 26, 2031 (1988)). Derartig funktionalisierte Polystyrole können zur in-situ-Bildung von Blockcopolymeren in Polymerblends verwendet werden zur Kompatibilisierung der Polymerblendbestandteile.

Die indirekte Funktionalisierung weist den Nachteil auf, daß Ethylenoxid im Verfahren eingesetzt werden muß, das toxikologisch bedenklich ist.

Verstärkte Blends aus PPE und schlagfestem Styrol, die als Formmassen in vielen Bereichen der Technik eingesetzt werden, sind an sich bekannt. Dabei ist bei vielen Anwendungen eine hohe Reißfestigkeit und Fließfähigkeit des Materials entscheidend.

Aus der DE 31 18 629 A1 sind Formmassen aus Polyphenylenethern und schlagfest modifizierten Styrolpolymerisaten bekannt, die als weitere Komponente ein Polyorganosiloxan enthalten, um der Formmasse eine hohe Fließfähigkeit zu verleihen. Werden diese Formmassen verstärkt, so ist die Steifigkeit der verstärkten Formmasse nicht für alle Anwendungen ausreichend groß.

In der EP-B1 0 214 400 sind Harzzusammensetzungen aus Polyphenylenetherharz und Styrolharz beschrieben, die zusätzlich ein Cyclopentadienharz aufweisen, das eine polare Gruppe enthält, um die Fließfähigkeit der Harzzusammensetzung zu verbessern. Auch in dieser Harzzusammensetzung sind die mechanischen Eigenschaften für viele Anwendungen unbefriedigend.

In der EP-A 0 319 833 sind verstärkte thermoplastische Formmassen beschrieben, die Polyphenylenether, ein schlagzähmodifiziertes Styrolpolymerisat und ein weiteres Copolymerisat aus Styrol und tert.-Butylacrylat enthalten. Das Copolymer aus Styrol und tert.-Butylacrylat dient der Verbesserung der mechanischen Eigenschaften, jedoch weist die Formmasse eine ungenügende Fließfähigkeit auf.

Eine Aufgabe der vorliegenden Erfindung ist die Bereitstellung eines funktionalisierten Copolymers aus vinylaromatischen Monomeren und Alkadien-Monomeren.

Eine weitere Aufgabe der vorliegenden Erfindung ist die Bereitstellung eines funktionalisierten Copolymers aus vinylaromatischen Monomeren und Alkadien-Monomeren, wobei der Funktionalisierungsgrad möglichst groß ist.

Eine weitere Aufgabe der vorliegenden Erfindung ist die Bereitstellung eines funktionalisierten Polymers aus vinylaromatischen Monomeren und Alkadien-Monomeren, wobei die Funktionalisierung keine Ethylenoxidgrundbausteine aufweist.

Eine weitere Aufgabe der vorliegenden Erfindung ist die Bereitstellung eines Verfahrens zur Herstellung der funktionalisierten Copolymere.

Eine weitere Aufgabe der vorliegenden Erfindung ist die Bereitstellung eines Verfahrens zur Herstellung der funktionalisierten Copolymere, wobei auf den Einsatz des toxikologisch bedenklichen Ethylenoxids verzichtet wird.

Eine weitere Aufgabe der vorliegenden Erfindung ist die Bereitstellung von verstärkten thermoplastischen Formmassen, die eine große Steifigkeit und Zähigkeit aufweisen.

Eine weitere Aufgabe der vorliegenden Erfindung ist die Bereitstellung von verstärkten thermoplastischen Formmassen, die eine sehr gute Reißfestigkeit und gleichzeitig Fließfähigkeit aufweisen.

Eine weitere Aufgabe der vorliegenden Erfindung ist die Bereitstellung von thermoplastischen Formmassen, die eine große Steifigkeit und Zähigkeit aufweisen.

Eine weitere Aufgabe der vorliegenden Erfindung ist die Bereitstellung von thermoplastischen Formmassen, die eine hohe Zähigkeit bzw. Schlagzähigkeit aufweisen.

Eine weitere Aufgabe der vorliegenden Erfindung ist die Bereitstellung eines Verfahrens zur Herstellung dieser (verstärkten) thermoplastischen Formmassen.

Eine weitere Aufgabe der vorliegenden Erfindung ist die Bereitstellung von Formkörpern, die eine gute Steifigkeit, Zähigkeit und Reißfestigkeit aufweisen.

Diese und weitere Aufgaben werden gelöst durch ein funktionalisiertes Copolymer, wie es eingangs definiert ist, durch ein Verfahren zu seiner Herstellung, (verstärkte) thermoplastische Formmassen, Verfahren zu deren Herstellung und Formkörper, wie sie in den Patentansprüchen definiert sind. Dabei sind bevorzugte funktionalisierte Copolymere den Unteransprüchen zu entnehmen. Verwendungen des funktionalisierten Copolymers und der (verstärkten) thermoplastischen Formmassen sind den Ansprüchen zu entnehmen.

### Funktionalisiertes Copolymer (Komponente (a))

Das erfindungsgemäße funktionalisierte Polymer hat die Formel:

A―B―Z―X

wobei
- A: einen Block aus vinylaromatischen Monomeren mit 8 bis 20, vorzugsweise 8 bis 12 Kohlenstoffatomen,
- B: einen Block aus Alkadien-Monomeren mit 4 bis 12, vorzugsweise 4 bis 8 Kohlenstoffatomen,
- Z: einen Grundbaustein einer Verbindung mit sterisch hindernden Gruppen und
- X: einen funktionalisierten Grundbaustein
bedeutet.

Dabei beträgt gemäß einer Ausführungsform der Erfindung der Funktionalisierungsgrad des Copolymers mindestens 35%, vorzugsweise mindestens 65%, besonders bevorzugt mindestens 85%, ist besonders bevorzugt größer als 85% und insbesondere mindestens 90%.

Der Block A kann dabei erfindungsgemäß aus einer Art oder mehreren Arten von vinylaromatischen Monomeren aufgebaut sein, d.h. ein Homo- oder Copolymer sein.

Eine Gruppe der erfindungsgemäß für A verwendbaren Monomeren sind Styrolmonomere. Dabei können die Styrolmonomere unsubstituiert sein, oder mit C₁₋₁₂-Alkylresten, vorzugsweise C₁₋₄-Alkylresten, am aromatischen Kern oder an der Vinylgruppe substituiert sein. Es können einer oder mehrere Alkylreste als Substituenten vorliegen, die geradkettig oder verzweigt sein können. Dabei ist es auch möglich, daß sowohl der aromatische Kern (Benzolkern) als auch die Vinylgruppe der Styrolmonomeren substituiert sind.

Beispiele erfindungsgemäß verwendbarer Styrole sind Styrol, α-Methylstyrol, p-Methylstyrol, Vinyltoluol und p-tert.-Butlystyrol, besonders bevorzugt Styrol.

Ebenfalls verwendbar sind vinylaromatische Monomere, die einen mehrkernigen aromatischen Rest an die Vinylgruppe gebunden enthalten. Ein geeigneter Rest ist beispielsweise ein Naphthylrest, der ggf. wie vorstehend beschrieben alkylsubstituiert sein kann.

Der Block B kann dabei erfindungsgemäß aus einer Art oder mehreren Arten von Alkadien-Monomeren aufgebaut sein, d.h. ein Homo- oder Copolymer sein.

Erfindungsgemäß für B verwendbare Monomere sind Alkadiene mit 4 bis 12, vorzugsweise 4 bis 8 Kohlenstoffatomen. Das Alkadien kann dabei unsubstituiert sein oder einen oder mehrere Alkylsubstituenten tragen. Beispiele nichtsubstituierter Alkadiene sind 1,4-Butadien, 1,3-Pentadien, konjugierte Hexadiene, Heptadiene oder Octadiene, wie auch cyclische Diene, wie Cyclopentadien. Alkylsubstituierte Diene sind beispielsweise Isopren, oder 2,3-Dimethylbutadien. Ebenfalls verwendbar sind mit aromatischen Resten substituierte Alkadiene, beispielsweise Phenylbutadien. Weitere geeignete konjugierte Diene, die anionisch polymerisierbar sind, sind dem Fachmann bekannt. Bevorzugt sind 1,4-Butadien und Isopren, sowie Gemische davon.

Die Alkylsubstituenten weisen dabei vorzugsweise 1 bis 8, besonders bevorzugt 1 bis 4 Kohlenstoffatome auf.

Die Blöcke A und B können einen scharfen Übergang zeigen, d.h. der Block A ist kovalent an den Block B gebunden. Der Übergang kann jedoch auch verschmiert sein, d.h. der Block A weist in der Nähe des Blocks B eine zunehmende Anzahl an Alkadien-Grundbausteinen auf, wobei Abschnitte aus vinylaromatischen Grundbausteinen und Alkadien-Grundbausteinen abwechseln können. Ebenso kann der Block B in der Nähe des Blocks A vinylaromatische Grundbausteine aufweisen in gleicher Weise. Daraus resultiert ein nicht scharfer, sondern verschmierter Übergang zwischen den Blöcken A und B.

Das funktionalisierte Copolymer kann auch ein statistisches A/B-Copolymer enthalten, wobei vinylaromatische Grundbausteine und Alkadien-Grundbausteine im Polymerrückgrat statistisch verteilt sind. Ebenso kann eine Vielzahl von alternierenden Blöcken A und B mit gleichen oder unterschiedlichen Kettenlängen vorliegen.

Gemäß einer bevorzugten Ausführungsform der Erfindung liegt ein scharfer Übergang zwischen dem Block A und dem Block B vor.

Gemäß einer Ausführungsform der Erfindung hat Block B zumindest teilweise Elastomereneigenschaften. Die aliphatischen ungesättigten Bindungen im Block B können durch Hydrierung gemäß einer Ausführungsform der Erfindung teilweise abgesättigt sein, wobei die aliphatischen ungesättigten Bindungen einen Hydrierungsgrad von 50 bis 100%, vorzugsweise 70 bis 100% und insbesondere 90 bis 100% aufweisen.

Z ist ein Grundbaustein einer Verbindung mit sterisch hindernden (räumlich anspruchsvollen) Gruppen.

Die Verbindung ist dabei vorzugsweise ein Vinylmonomer, das mit sterisch hindernden Gruppen zumindest an einem Kohlenstoffatom substituiert ist. Vorzugsweise ist dabei die Vinylgruppe an einem Kohlenstoffatom durch zwei aromatische Reste substituiert, vorzugsweise durch Vinylreste, die wiederum substituiert sein können durch die vorstehend für die Monomere des Blocks A beschriebenen Alkylreste und weiteren Substituenten. An das andere Kohlenstoffatom der Vinylgruppe kann beispielsweise ein Alkylrest gebunden sein, der vorzugsweise 1 - 4 Kohlenstoffatome aufweist und ggf. wiederum wie beschrieben substituiert sein kann. Die mit sterisch hindernden Gruppen substituierte Vinylgruppe weist dabei gemäß einer Ausführungsform der Erfindung insgesamt 14 - 22 Kohlenstoffatome auf.

Somit ist der Grundbaustein Z vorzugsweise eine Diarylalkylengruppe mit 14 bis 22 Kohlenstoffatomen, insbesondere eine 1,1-Diarylethylen-Gruppe der Formel 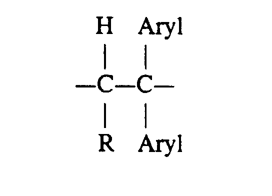 in der R Wasserstoff oder einen Alkylrest mit 1 bis 4 Kohlenstoffatomen und "Aryl" einen Arylrest mit 6 bis 10 Kohlenstoffatomen, vorzugsweise einen Phenylrest, bedeuten.

X ist ein funktionalisierter Grundbaustein. Die funktionelle(n) Gruppe(n) ist/sind gemäß einer Ausführungsform der Erfindung derart ausgestaltet, daß sie eine feste Bindung, insbesondere eine kovalente Bindung, mit einem Verstärkungsmittel, vorzugsweise einer Glasfaser oder silanisierten Glasfaser, in einer Formmasse ausbilden kann, wie sie nachstehend bei den Formmassen beschrieben sind.

Die funktionelle Gruppe, mit der die kovalente Bindung zum Grundbaustein Z erreicht wird, kann eine beliebige dafür geeignete funktionelle Gruppe sein. Vorzugsweise ist sie eine Hydroxylgruppe oder ein Halogenatom, vorzugweise ein Chloratom. Die funktionelle Gruppe X ist vorzugsweise eine eine Säureanhydridgruppe tragende Kohlenwasserstoffgruppe, insbesondere eine eine Säureanhydridgruppe tragende Arylgruppe. Die funktionelle Gruppe ist dabei an das Kohlenstoffatom gebunden, das auch die Arylreste trägt. Die funktionelle Gruppe X ist eine Anhydridgruppe oder eine Säureanhydridgruppe. Die Anhydridgruppe und die Säureanhydridgruppe hat vorzugsweise 2 bis 8 Kohlenstoffatome. Bevorzugte Beispiele für die funktionelle Gruppe X sind der von der Trimellitsäure abgeleitete Säureanhydridrest.

Diese funktionelle Gruppe dient gemäß einer Ausführungsform dazu, eine feste Bindung, insbesondere eine kovalente Bindung, mit einem Verstärkungsmittel, vorzugsweise einer Glasfaser oder einer silanisierten Glasfaser in einer Formmasse auszubilden, wie sie nachstehend beschrieben sind. Die mindestens difunktionelle Verbindung bzw. der funktionalisierte Grundbaustein X kann als diese funktionelle Gruppe beispielsweise OH, COOH, COOR, SH, NCO, NH₂ enthalten. Sie enthält vorzugsweise eine NH₂-Gruppe oder eine Säureanhydridgruppe, insbesondere eine Säureanhydridgruppe.

Dabei kann eine den funktionalisierten Grundbaustein X einführende mindestens difunktionelle Verbindung gemäß einer Ausführungsform der Erfindung die Formel 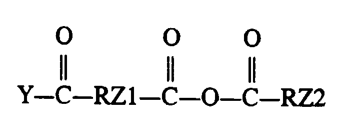 aufweisen, wobei RZ1 und RZ2 jeweils einen Kohlenwasserstoffrest mit vorzugsweise 1 bis 10 Kohlenstoffatomen bedeuten, wobei die Reste RZ1 und RZ2 auch zusammen eine Kohlenwasserstoffringstruktur, insbesondere einen aromatischen Ring, vorzugsweise einen Benzolring, oder einen Cycloalkylring bilden können, wobei die beiden Kohlenstoffatome der Säureanhydridgruppe vorzugsweise an benachbarten Kohlenstoffatomen der Ringstruktur angebunden sind. Der Rest Y ist eine Hydroxylgruppe oder ein Halogenatom, vorzugsweise ein Chloratom. Bevorzugte Beispiele für den funktionalisierten Grundbaustein X sind der von der Trimellitsäure abgeleitete Säureanhydridrest, insbesondere in folgenden Konfigurationen:

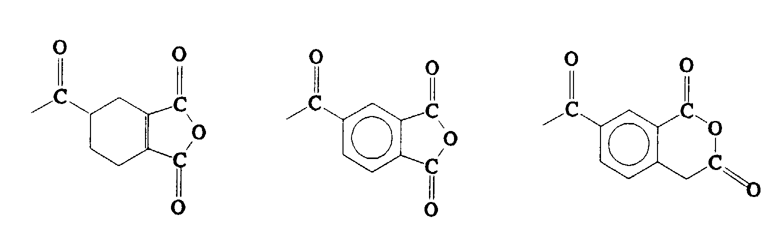

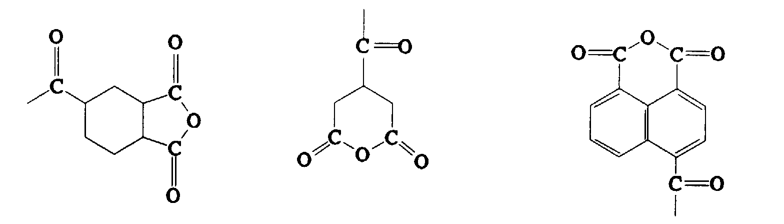

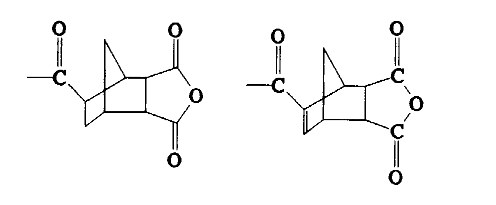

Bevorzugt wird das 1,2-Anhydrid oder 1,2 Anhydridchlorid der 1,2,4-Benzoltricarbonsäure (Trimellitsäure), der Chlorethanoylbernsteinsäureanhydrid, Chlorformylbernsteinsäureanhydrid oder 1-Acetoxyacetyl-3,4-phthalsäureanhydrid als den Grundbaustein X einführende mindestens difunktionelle Verbindung eingesetzt, besonders bevorzugt ist Trimellitsäureanhydridchlorid. Auch andere Verbindungen, die sowohl eine Säureanhydridfunktion als auch eine Säurehalogenid- oder Säurefunktion aufweisen, sind erfindungsgemäß zur Herstellung des funktionalisierten Polymers verwendbar.

Vorzugsweise enthalten die Grundbausteine Z und X gemäß einer Ausführungsform der Erfindung keine Ethylenoxidgrundbausteine, die in der Hauptkette vorliegen.

Das Molekulargewicht (Gewichtsmittel) des funktionalisierten Copolymers liegt erfindungsgemäß vorzugsweise im Bereich von 10.000 bis 500.000, insbesondere von 20.000 bis 200.000. Das mittlere Molekulargewicht des Alkadienblocks B ist dabei in weiten Bereichen unkritisch. Vorteilhafterweise hat dieser Block ein ungefähr gleiches oder niedrigeres Molekulargewicht als der Block A aus vinylaromatischen Monomeren. Gemäß einer Ausführungsform der Erfindung liegt das Gewichtsverhältnis zwischen dem Block A und dem Block B im Bereich von 1:9 bis 9:1. Vorzugsweise weisen Homopolymerisate beider Blöcke jeweils Gewichtsmittel des Molekulargewichts von 10.000 bis 100.000 auf. Dabei wird das Molekulargewicht mit Hilfe der Gelpermeationschromatographie gegen Polystyroleichstandards bestimmt.

Der Funktionalisierungsgrad des funktionalisierten Copolymers wird durch ¹H-NMR bestimmt, ist aber auch durch Potentiometrie oder durch Titration gegen Basen mit geeigneten Indikatoren möglich.

### Herstellung des funktionalisierten Copolymers

Es wurde erfindungsgemäß gefunden, daß die funktionalisierten Copolymere, vorzugsweise mit hohem Funktionalisierungsgrad, dann erhalten werden, wenn man das lebende Anion des Copolymer-Blocks A―B zunächst mit sterisch hindernde Gruppen tragenden Verbindungen wie 1,1-Diphenylethylen umsetzt und das erhaltene Produkt mit einer mindestens difunktionellen Verbindung wie Trimellitsäureanhydridchlorid umsetzt. Der Funktionalisierungsgrad, der durch IR-Spektroskopie oder Titration bestimmt werden kann, ist bei diesem Vorgehen vorzugsweise mindestens 35%, besonders bevorzugt mindestens 60%, insbesondere größer als 85%, speziell mindestens 90%.

Im Gegensatz zu dem von Park, Barlow und Paul beschriebenen indirekten Funktionalisierungsweg kann auf die Verwendung von Ethylenoxid, das toxikologisch bedenklich ist, verzichtet werden. Im Gegensatz dazu ist das erfindungsgemäß eingesetzte Diphenylethylen toxikologisch unbedenklich.

Bei einer Herstellung von funktionalisierten Copolymeren in Anlehnung an den von Park, Barlow und Paul beschriebenen indirekten Funktionalisierungsweg wurden nur sehr niedrige Funktionalisierungsgrade von 25 bzw. 30% erreicht.

Ein wie vorstehend beschriebenes funktionalisiertes Copolymer kann gemäß einem Verfahren hergestellt werden, wobei
a) vinylaromatische Monomere und Alkadien-Monomere anionisch zu einem ersten lebenden, einen Block A und einen Block B enthaltenden Copolymer der Formel A―B⁻ polymerisiert werden,
b) das erste lebende Copolymer mit einer Verbindung mit sterisch hindernden Gruppen zu einem zweiten lebenden Copolymer der Formel A―B―Z^{^{⊖}} umgesetzt wird und
c) das zweite lebende Copolymer mit einer mindestens difunktionellen Verbindung zu einem Copolymer der Formel A―B―Z―X umgesetzt wird,
wobei die hier verwendeten Abkürzungen die gleiche Bedeutung wie in den Polymeransprüchen haben.

Anionische Polymerisationsverfahren zur Herstellung des Copolymers aus Block A und B sind z.B. in den US-Patentschriften 3,251,905, 3,390,207, 3,598,887 und 4,219,627 ausführlich beschrieben. Als Initiatoren für die Polymerisation eignen sich alkalimetallorganische Verbindungen, vorzugsweise Lithiumalkyle wie z.B. Methyllithium, Ethyllithium, n- oder s-Butyllithium oder Isopropyllithium. Besonders bevorzugt wird n- oder s-Butyllithium eingesetzt.

Auch die Herstellung anderer mono- oder bifunktioneller anionischer Polymerisate ist bekannt und unter anderem bereits in EP 0 303 177, EP 0 295 675, US 4,950,721, DE 36 39 569 und DE 35 37 771 beschrieben.

Als Lösungsmittel für die anionische Polymerisation zur Herstellung der erfindungsgemäßen funktionalisierten Copolymere eignen sich vor allem geradkettige oder verzweigte aliphatische Kohlenwasserstoffe, wie z.B. n-Octan oder n-Hexan, sowie einfache oder substituierte cycloaliphatische und aromatische Kohlenwasserstoffe wie z.B. Cyclohexan, Methylcyclohexan oder Toluol, Benzol sowie jede beliebige Mischung der aliphatischen, cycloaliphatischen und aromatischen Kohlenwasserstoffe. Vorzugsweise wird Cyclohexan als Lösungsmittel verwendet.

Als Lösungsmittelkomponenten sind ferner Ether wie Tetrahydrofuran oder Diethylether sowie tertiäre Amine wie z.B. Tetramethylethylendiamin oder Pyridin in Konzentrationen von 0,01 bis 20, vorzugsweise 0,01 bis 2 Gew.-% geeignet. Bevorzugt ist Tetrahydrofuran.

Alle Einsatzstoffe müssen von sauerstoff- und protonenaktiven Verunreinigungen befreit werden, was z.B. durch Kontaktieren mit Metallorganylen oder durch adsorptive Reinigung, z.B. Calciumhydrid erfolgen kann. Die Durchführung der Polymerisation erfolgt vorzugsweise unter Inertgasbedingungen bei Temperaturen von -100 bis +120 °C, vorzugsweise bei -80 bis +80 °C.

Gemäß einer Ausführungsform der Erfindung werden in einem ersten Polymerisationsschritt die vinylaromatischen Monomere zur Bildung des Blocks A vollständig auspolymerisiert und im zweiten Polymerisationsschritt der Block A mit den Alkadien-Monomeren zur Bildung des Blocks B vollständig umgesetzt. Dabei entstehen scharfe Übergänge zwischen den einzelnen Blöcken.

Gemäß einer Ausführungsform der vorliegenden Erfindung können erfindungsgemäße Copolymere dadurch hergestellt werden, daß zunächst durch anionische Polymerisation, vorzugsweise unter Einsatz von Lithium-Initiatoren, insbesondere Alkyllithium, speziell bevorzugt n-Butyllithium und sekundärem Butyllithium, die Grundstruktur

A―B―Li

als "lebendes" Copolymer in an sich bekannter Weise erzeugt wird. Dieses "lebende" Copolymer wird dann in einer zweiten Stufe durch Umsetzen mit einem Molekül einer Verbindung der Formel 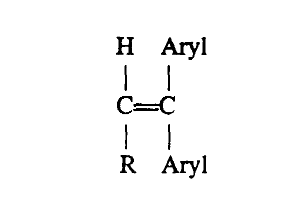 unter Herstellung eines zweiten lebenden Copolymers 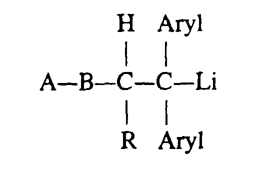 umgesetzt. Dieses weitere lebende Copolymer wird schließlich in einer weiteren Stufe mit einer mindestens difunktionellen Verbindung umgesetzt, die einen funktionalisierten Grundbaustein X einführt. Dabei dient eine funktionelle Gruppe zur Ermöglichung der kovalenten Bindung des Grundbausteins X an Z, und mindestens eine weitere funktionelle Gruppe stellt die Funktionalisierung des Grundbausteins und somit des Copolymers bereit. Weist die mindestens difunktionelle Verbindung dabei beispielsweise erfindungsgemäß eine Hydroxylgruppe oder ein Halogenatom, vorzugsweise ein Chloratom, vorzugsweise in einer Säure- oder Säurechloridgruppe, als funktionelle Gruppe auf, die die Bindung an den Grundbaustein Z ermöglicht, so wird unter Ausbildung einer kovalenten Bindung zwischen dem Grundbaustein Z und dem funktionalisierten Grundbaustein X ein Halogenidion oder ein OH⁻-Ion abgespalten. Dabei entsteht das ungeladene funktionalisierte Copolymer der Erfindung, dessen Funktionalisierung wie vorstehend beschrieben ist.

Die einzelnen Stufen des erfindungsgemäßen Verfahrens werden vorzugsweise unter folgenden Bedingungen durchgeführt:
(a) Die Polymerisation von Vinylaromat und Alkadien mit Lithium-Initiator wird bei Temperaturen von -100 °C bis 100 °C, vorzugsweise von -20 °C bis 80 °C, durchgeführt.
(b) Die Umsetzung des lebenden Copolymers mit CHR=CAryl₂ erfolgt ebenfalls bei Temperaturen von -100 °C bis 100 °C, vorzugsweise von -20 °C bis 80 °C.
(c) Die Einführung der funktionellen Gruppe in das weitere lebende Copolymer unter Abspaltung des Lithium wird im Temperaturbereich von -100 °C bis 50 °C, vorzugsweise von -20 °C bis 30 °C, vorgenommen.

Das Polymerisationsgemisch kann zur Isolierung des Copolymeren nach bekannten Verfahren wahlweise direkt zur Trocknung erhitzt oder mit Wasserdampf behandelt werden, wobei das Lösungsmittel abdestilliert wird. Es kann gleichfalls in einem Überschuß Nichtlösungsmittel wie z.B. Ethanol gefällt und mechanisch abgetrennt und getrocknet oder durch Extruderentgasung aufgearbeitet werden.

Die Aufarbeitung des Reaktionsgemisches erfolgt beispielsweise durch Ausfällung des funktionalisierten Copolymers mit Petrolether, Absaugen und Trocknen des Niederschlags.

Gemäß einer Ausführungsform der Erfindung können die so erhaltenen funktionalisierten Copolymere nach üblichen Verfahren durch Hydrierbehandlung in Copolymere überführt werden, in denen die aliphatischen ungesättigten Bindungen zumindest teilweise abgesättigt sind, d.h. sie weisen einen Hydrierungsgrad von 50 bis 100%, vorzugsweise 70 bis 100% und insbesondere 90 bis 100%, auf.

Die Hydrierung wird vorzugsweise mit molekularem Wasserstoff und Katalysatoren auf Basis von Metallen oder Metallsalzen der achten Gruppe des Periodensystems durchgeführt. Sie kann in heterogener Phase z.B. mit Raney-Nickel oder bevorzugt in homogener Phase mit Katalysatoren auf Basis von Salzen, insbesondere Carboxylaten, Alkoxiden oder Enolaten des Kobalts, Nickels oder Eisens, die mit Metallalkylen, insbesondere mit Aluminiumalkylen, kombiniert sind, oder homogen durch in situ erzeugte Diimine aus z.B. Tosylhydrazid erfolgen. Entsprechende Verfahren sind beispielsweise beschrieben in den US-Patentschriften 3,113,986 und 4,226,952.

Gemäß einer Ausführungsform der Erfindung weist das funktionalisierte Copolymer einen Block A aus vinylaromatischen Monomeren auf, der mit Polyphenylenether und Polystyrol kompatibel bzw. verträglich ist. Unter der Verträglichkeit zweier Polymerkomponenten versteht man im allgemeinen die Mischbarkeit der Komponenten oder die Neigung des einen Polymeren, sich in der anderen Polymerkomponente zu lösen (siehe B. Vollmert, Grundriß der Makromolekularen Chemie, Band IV, S. 222 ff, E. Vollmert Verlag, 1979). Zwei Polymere sind um so besser verträglich, je geringer die Differenz ihrer Löslichkeitsparameter ist. Derartige Parameter sowie die Mischungsenthalpie sind nicht einheitlich für alle Polymere bestimmbar, so daß die Löslichkeit nur indirekt, z.B. durch Torsions-Schwingungs- oder DTA-Messungen bestimmbar ist. Beispiele für bevorzugte, mit Polyphenylenethern verträgliche vinylaromatische Polymere sind der Monografie von O. Olabisi, Polymer-Polymer Miscibility, 1979, S. 224 bis 330 und 245 zu entnehmen. Dabei ist der funktionalisierte Grundbaustein X fähig, eine Bindung mit Verstärkungsmitteln wie Glasfaser oder silanisierten Glasfasern einzugehen, um diese fest zu binden. Dadurch kann das funktionalisierte Polymer in Polyphenylenether/Polystyrol-Gemischen oder Blends verwendet werden, die ggf. Verstärkungsmittel enthalten, und kann zur Herstellung von, ggf. verstärkten, thermoplastischen Formmassen dienen.

### Thermoplastische Formmassen, Polyphenylenether enthaltend

Die Aufgaben der vorliegenden Erfindung werden durch die in den Ansprüchen beschriebene, gemäß einer Ausführungsform verstärkte, thermoplastische Formmasse gelöst, die Polyphenylenether enthält. Diese ist gekennzeichnet durch
(a) 0,1 bis 20 Gew.-% mindestens eines funktionalisierten Copolymers, wie es in einem der Copolymeransprüche definiert ist,
(b) 1 bis 98,9 Gew.-% mindestens eines Polyphenylenethers,
(c) 1 bis 98,9 Gew.-% mindestens eines vinylaromatischen Polymers,
(d) 0 bis 50 Gew.-% mindestens eines Verstärkungsmittels, und
(e) 0 bis 60 Gew.-% weiterer Zusatzstoffe und/oder Verarbeitungshilfsmittel,
wobei Mengen der Komponenten (a) bis (e) gemeinsam 100 Gew.-% ergeben.

Vorzugsweise enthalten die erfindungsgemäßen, ggf. verstärkten, thermoplastischen Formmassen 0,2 - 15 Gew.-%, insbesondere 0,5 - 10 Gew.-%, der Komponente (a), 1 - 97,9 Gew.-%, besonders bevorzugt 20 - 89,9 Gew.-%, insbesondere 35 - 79,5 Gew.-%, der Komponente (b), 1 - 97,9 Gew.-%, besonders bevorzugt 5 - 60 Gew.-%, insbesondere 10 - 45 Gew.-%, der Komponente (c), 1 - 50 Gew.-%, besonders bevorzugt 5 - 45 Gew.-%, insbesondere 10 - 40 Gew.-%, der Komponente (d) und 0 - 30 Gew.-%, insbesondere 0 - 20 Gew.-%, der Komponente (e).

Dabei ergeben die Mengen der Komponenten (a) - (e) immer gemeinsam 100 Gew.-%.

Die einzelnen Komponenten sind nachstehend näher erläutert.

### Polyphenylenether der Komponente (b)

Der Polyphenylenether der Komponente (b) liegt in den erfindungsgemäßen verstärkten thermoplastischen Formmassen in einer Menge von 1 bis 98,9 Gew.-%, vorzugsweise 1 bis 97,9 Gew.-%, besonders bevorzugt 20 bis 89,9 Gew.-%, insbesondere 35 bis 79,5 Gew.-% vor, bezogen auf die verstärkte thermoplastische Formmasse. Die in den erfindungsgemäßen Formmassen enthaltenen Polyphenylenether (b) sind an sich bekannt. Sie werden nach üblichen Verfahren aus in ortho-Position durch Alkylgruppen, Alkoxygruppen, Chlor- oder Brom-disubstituierten Phenolen durch oxidative Kopplung hergestellt (vgl. US-Patente 3,661,848, 3,378,505, 3,306,874, 3,306,875, 3,639,656). Die Alkyl- oder Alkoxygruppen, die bevorzugt 1 bis 4 C-Atome, aber kein alpha-ständiges tertiäres Wasserstoffatom enthalten, können ihrerseits durch Chlor oder Brom substituiert sein. Geeignete Polyphenylenether sind beispielsweise Poly-2,6-diethyl-1,4-phenylenether, Poly-2-methyl-6-ethyl-1,4-phenylenether, Poly-2-methyl-6-propyl-1,4-phenylenether, Poly-2,6-dipropyl-1,4-phenylenether, Poly-2-ethyl-6-propyl-1,4-phenylenether, Poly-2,6-dichlor-1,4-phenylenether und Poly-2,6-dibrom-1,4-phenylenether oder Copolymere, wie solche, die 2,3,6-Trimethylphenol enthalten, außerdem Polymermischungen. Bevorzugt ist Poly-2,6-dimethyl-1,4-phenylenether. Die Polyphenylenether weisen im allgemeinen eine relative Viskosität von 0,3 bis 0,7 dl/g, gemessen in 1 Gew.-%-iger Lösung in Chloroform bei 25 °C auf.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Als Polyphenylenether-Komponente (b) können auch Propfcopolymere aus Polyphenylenether und vinylaromatischen Polymeren wie Styrol, Alpha-Methylstyrol, Vinyltoluol und Chlorstyrol verwendet werden.

Im Rahmen der vorliegenden Erfindung können modifizierte Polyphenylenether eingesetzt werden, wie sie z.B. aus der WO 86/2086, WO 87/0540, EP-A 222 246, EP-A 223 116 und EP-A 254 048 bekannt sind.

### Vinylaromatische Polymere der Komponente (c)

Die vinylaromatischen Polymere werden erfindungsgemäß in Mengen von 1 bis 98,9 Gew.-%, vorzugsweise 1 bis 97,9 Gew.-%, besonders bevorzugt 5 bis 60 Gew.-%, insbesondere 10 bis 45 Gew.-% verwendet, bezogen auf die verstärkte thermoplastische Formmasse.

Vinylaromatische Polymere, insbesondere Polystyrole der Komponente (c) sind an sich bekannt, beispielsweise aus EP-A-0 319 833.

Als vinylaromatische Polymere kommen beispielsweise alle üblichen Homo- und Copolymerisate des Styrols in Betracht. Üblicherweise liegen die Molekulargewichte der gebräuchlichen Styrolpolymerisate (Gewichtsmittel M_{W}) zwischen 150000 und 300000. Geeignete Styrolpolymerisate werden überwiegend aus Styrol, ferner aus mit C₁₋₄-Alkyl-Kern- oder Seitenketten-alkylierten Styrolen wie Alpha-Methylstyrol oder p-Methylstyrol nach den bekannten Verfahren in Masse, Lösung oder Suspension hergestellt (vgl. Ullmanns Enzyklopädie der technischen Chemie, Band 19, S. 265 bis 272, Verlag Chemie, Weinheim 1980).

Die vinylaromatischen Polymere der Komponente (c) können auch schlagzähmodifiziert sein durch Zumischen von geringen Mengen, vorzugsweise von 2 bis 20 Gew.-%, bezogen auf das Styrolpolymerisat, eines Acrylatkautschuks oder eines Polymerisates eines konjugierten Diens wie Butadien oder Isopren. Die Dienpolymerisate können teilweise oder vollständig hydriert sein. Der Kautschuk bzw. das Dienpolymerisat sollten eine Glastemperatur von unter 0 °C, gemessen nach K.H. Illers und H. Breuer, Kolloidzeitschrift 176 (1961), S. 110, aufweisen. Geeignet sind übliche Kautschuke wie Polybutadienkautschuk, Acrylatkautschuk, Styrolbutadienkautschuk, hydrierter Styrolbutadienkautschuk, Acrylnitrilbutadienkautschuk, Polyisoprenkautschuk, Ionomere, Styrolbutadienblockcopolymere einschließlich AB-, ABA-, ABAB-verschmiert (taper) Block-Copolymere, Stern-Block-Copolymere und ähnliche, analoge Isoprenblockcopolymerisate und insbesondere (teil-) hydrierte Blockcopolymere, wie sie an sich aus EP-A-62 283 bekannt sind. Derartige synthetische Kautschuke sind dem Fachmann geläufig und zusammenfassend neben den nicht geeigneten EPDM-Kautschuken in "Ullmanns Enzyklopädie der technischen Chemie", 4. Auflage, Band 13, S. 595 bis 634, Verlag Chemie GmbH, 1977, beschrieben.

Die Schlagzähmodifizierung kann in bevorzugter Weise auch dadurch erreicht werden, daß die Styrolpolymerisate in Gegenwart kleinerer Mengen z.B. 2 bis 20 Gew.-%, bezogen auf das Styrolpolymerisat, eines kautschukartigen Polymerisates auf Basis eines konjugierten Diens, ggf. eines Acrylatkautschuks, hergestellt werden (HIPS). Dabei sind kautschukartige Polymerisate auf der Basis von Butadien, z.B. Styrol-Butadien-Polymerisate, Polybutadien und ferner Butadien-Styrol-Block-Copolymerisate geeignet. Diese in bestimmter Weise schlagzähmodifizierten Styrolpolymerisate sind dem Fachmann aus der Literatur und Praxis geläufig, so daß an dieser Stelle eine nähere Erläuterung überflüssig erscheint (vgl. "Ullmanns Enzyklopädie der technischen Chemie", 4. Auflage, Band 19, S. 272 bis 295, Verlag Chemie GmbH, 1980).

Geeignete schlagfeste Polystyrole sind beispielsweise in der DE 31 18 629 Al beschrieben, wie auch Verfahren zu ihrer Herstellung.

### Verstärkungsmittel der Komponente (d)

Die Polyphenylenether enthaltenden Formmassen können gemäß einer Ausführungsform der Erfindung frei sein von Verstärkungsmitteln.

Gemäß einer weiteren Ausführungsform der Erfindung enthalten die Polyphenylenether enthaltenden Formmassen jedoch ein Verstärkungsmittel. Diese Ausführungsform wird nachstehend beschrieben.

Die Verstärkungsmittel werden dabei erfindungsgemäß in Mengen von 1 bis 50 Gew.-%, vorzugsweise 5 - 45 Gew.-%, insbesondere 10 - 40 Gew.-%, bezogen auf die verstärkte thermoplastische Formmasse, verwendet.

Die erfindungsgemäßen Formmassen enthalten als Komponente (d) übliche Verstärkungsmaterialien, wie Glasfasern, Glaskugeln, Mineralfasern, Aluminiumoxidfasern, Kohlenstoffasern, Kaliumtitanatwhisker, Aramidfasern. Bevorzugt sind Kohlenstoffasern, Kaliumtitanatwhisker, Aramidfasern und Glasfasern, insbesondere Glasfasern.

Die Glasfasern können aus E-, A- oder C-Glas sein. Ihr Durchmesser liegt im allgemeinen zwischen 6 und 20 µm. Es können sowohl strangförmige Endlosfasern (Rowings) als auch Schnittglasfasern mit einer Länge von 1 bis 10 mm, vorzugsweise 3 bis 6 mm oder Kurzglasfasern mit einer Länge von 0,05 bis 1,5 mm verwendet werden.

Gemäß einer Ausführungsform der vorliegenden Erfindung sind die Verstärkungsmittel der Komponente (d) unbehandelt.

Gemäß einer weiteren bevorzugten Ausführungsform der Erfindung sind die Verstärkungsmittel der Komponente (d) beschichtet bzw. geschlichtet. Diese Schicht bzw. Schlichtung bedeckt die Verstärkungsmittel der Komponente (d), insbesondere die Glasfasern, vorzugsweise gleichmäßig auf der gesamten Oberfläche.

Die Beschichtung bzw. Schlichte ist gemäß einer Ausführungsform der Erfindung eine Silanverbindung. Geeignete Silanverbindungen sind solche der allgemeinen Formel

(X-CH₂)ₙ)_{K}-Si-(O-CₘH₂ₘ₊₁)_{4-K}

in der die Substituten folgende Bedeutung haben:
- X: NH₂-; 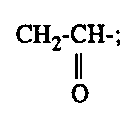 HO-,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf die Verstärkungsmittel der Komponente (d)) zur Oberflächenbeschichtung eingesetzt.

Die beschichteten bzw. geschlichteten Verstärkungsmittel der Komponente (d), vorzugsweise die beschichteten bzw. wie vorstehend geschlichteten Glasfasern sind besonders gut umsetzbar mit dem funktionalisierten Copolymer der Komponente (a). Dadurch wird eine feste Bindung zwischen dem funktionalisierten Copolymer der Komponente (a) und dem Verstärkungsmittel (d), insbesondere der Glasfaser erreicht. Da der Polymerblock A des funktionalisierten Polymers verträglich ist mit dem Polyphenylenether der Komponente (b) und dem vinylaromatischen Polymer der Komponente (c) werden die Verstärkungsmittel der Komponente (d) gut in den erfindungsgemäßen Formmassen verteilt und sind innig mit diesen verbunden, was zu einer verbesserten Reißfestigkeit und einem hohen Elastizitätsmodul führt.

### Zusatzstoffe und Verarbeitungshilfsmittel der Komponente (e)

Die als Komponente (e) verwendeten üblichen Zusatzstoffe und/oder Verarbeitungshilfsmittel werden in Mengen von 0 bis 60 Gew.-%, vorzugsweise 0 bis 30 Gew.-%, insbesondere 0 - 20 Gew.-%, bezogen auf die verstärkte thermoplastische Formmasse, verwendet.

Als übliche Zusatzstoffe und Verarbeitungshilfsmittel kommen vor allem teilchenförmige Füllstoffe, Oxidationsinhibitoren, Flammschutzmittel, übliche Hitze- und Lichtstabilisatoren, Gleit- und Entformungsmittel, Färbemittel, Farbstoffe, Weichmacher und Pigmente in üblichen Mengen in Betracht. Zudem können den erfindungsgemäßen verstärkten Formmassen andere als die genannten Polymerisate, z.B. auf vinylaromatischer Basis, Polyamide, wie sie z.B. nachstehend als Komponente (f) beschrieben sind, und/oder Kautschuke zugesetzt werden.

Teilchenförmige Füllstoffe als Bestandteile der Komponente (e) werden bevorzugt aus folgender Gruppe ausgewählt: amorphe Kieselsäure, Magnesiumcarbonat, gepulverter Quarz, Glimmer, Talkum, Feldspat, Wollastonit, Kaolin, insbesondere kalzinierter Kaolin.

Bevorzugte Kombinationen von Komponenten (d) und (e) sind z.B. 20 Gew.-% Glasfasern mit 15 Gew.-% Wollastonit und 15 Gew.-% Glasfasern mit 15 Gew.-% Wollastonit. Dabei sind die Gewichtsprozentangaben jeweils auf die gesamten Komponenten (a) bis (e) bezogen.

Bevorzugt sind schließlich auch verstärkte thermoplastische Formmassen, die als Teile der Komponente (e) Flammschutzmittel aus folgender Gruppe enthalten: Polyhalogendiphenyl, Polyhalogendiphenylether, Polyhalogenphthalsäure und deren Derivate, Polyhalogenoligocarbonate, Polyhalogenpolycarbonate, Phosphorverbindungen.

Beispiele für Flammschutzmittel sind Polymere des 2,6,2',6'-Tetrabrombisphenols A, der Tetrabromphthalsäure, des 2,6-Dibromphenols und 2,4,6-Tribromphenols und deren Derivate.

Bevorzugtes Flammschutzmittel ist elementarer Phosphor. In der Regel kann der elementare Phosphor mit z.B. Polyurethanen oder Aminoplasten phlegmatisiert oder gecoatet werden. Außerdem sind Konzentrate von rotem Phosphor z.B. in einem Polyamid, Elastomeren oder Polyolefin geeignet. Besonders bevorzugt sind Kombinationen von elementarem Phosphor mit 1,2,3,4,7,8,9,10,13,13,14,14-Dodecachloro-1,4,4a,5,6,6a,7,10,10a,11,12,12a-dodecahydro-1,4:7,10-dimethanodibenzo(a,e)-cyclooctan und gegebenenfalls einem Synergisten z.B. Antimontrioxid.

Phosphorverbindungen wie organische Phosphate, Phosphonate, Phosphinate, Phosphinoxide, Phosphine oder Phosphite sind ebenfalls bevorzugt. Als Beispiel seien Triphenylphosphinoxid und Triphenylphosphat und Resorcinolbistriphenyl-phosphinoxid genannt. Dieses kann allein oder vermischt mit Hexabrombenzol oder einem chlorierten Biphenyl und, wahlweise, Antimonoxid verwendet werden.

Typisch für die bevorzugten Phosphorverbindungen, die gemäß der vorliegenden Erfindung verwendet werden können, sind solche der folgenden allgemeinen Formel 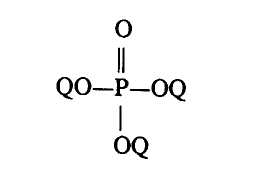 worin Q für gleiche oder verschiedene Reste, Kohlenwasserstoffreste, wie Alkyl, Cycloalkyl, Aryl, alkylsubstituiertes Aryl und arylsubstituiertes Alkyl steht, ferner Halogen, Wasserstoff und deren Kombinationen, vorausgesetzt, daß mindestens einer der für Q stehenden Reste ein Arylrest ist.

Beispiele solcher geeigneter Phosphate sind: Phenylbisdodecylphosphat, Phenylbisneopentylphosphat, Phenylethylenhydrogenphosphat, Phenyl-bis-(3, 5,5-trimethylhexyl)phosphat, Ethyldiphenylphosphat, 2-Ethylhexyldi(p-tolyl)phosphat, Bis-(2-ethylhexyl)phenylphosphat, Tri(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat, Triphenylphosphinoxid und Phenyl-bis-triphenyl phosphinoxid.

Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphornitrilchlorid, Phosphorsäureesteramide, Phosphorsäureesteramine, Phosphorsäureamide, Phosphonsäureamide, Phosphinsäureamide, Tris(aziridinyl)-phosphinoxid oder Tetrakis(hydroxymethyl)phosphoniumchlorid. Diese entflammungshemmenden Additive sind größtenteils im Handel erhältlich.

Weitere geeignete Flammschutzmittel sind Hydroxide des Magnesiums, welche gegebenenfalls mit Silanverbindungen beschichtet sind.

Weitere halogenhaltige Flammschutzmittel sind Tetrabrombenzol, Hexachlorbenzol und Hexabrombenzol sowie halogenierte Polystyrole und Polyphenylenether.

Auch die in der DE 19 46 924 beschriebenen halogenierten Phthalimide können verwendet werden. Von diesen hat insbesondere N,N'-Ethylenbistetrabromphthalimid Bedeutung erlangt.

Oxidationsverzögerer und Wärmestabilisatoren, die den thermoplastischen Massen gemäß der Erfindung zugesetzt werden können, sind z.B. Halogenide von Metallen der ersten Gruppe des Periodensystems, z.B. Natrium-, Kalium- oder Lithiumhalogenide, ggf. in Verbindung mit Kupfer-(I)-halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-%, eingesetzt werden.

Materialien zur Erhöhung der Abschirmung gegen elektromagnetische Wellen wie Metallflocken, -pulvern, -fasern, metallbeschichtete Füllstoffe können ebenfalls mitverwendet werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Als bevorzugten Stabilisator können die erfindungsgemäßen Formmassen mindestens eine phosphorhaltige anorganische Säure oder deren Derivate in Mengen bis zu 1.000 bevorzugt 30 bis 200 und insbesondere 50 bis 130 ppm, bezogen auf den Phosphorgehalt der Verbindungen, enthalten.

Bevorzugte Säuren sind hypophosphorige Säure, phosphorige Säure oder Phosphorsäure sowie deren Salze mit Alkalimetallen, wobei Natrium und Kalium besonders bevorzugt sind. Unter organischen Derivaten dieser Säuren sollen vorzugsweise Esterderivate oben genannter Säuren mit Fettsäuren verstanden werden, wobei die Fettsäuren 12 bis 44 Kohlenstoffatome, bevorzugt 22 bis 40 Kohlenstoffatome aufweisen. Als Beispiele seien Stearinsäure, Behensäure, Palmitinsäure oder Montansäure genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden.

Gleit- und Entformungsmittel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-stearat) oder Esterderivate (z.B. Stearylstearat oder Pentaerythrittetrastearat) sowie Amidderivate (z.B. Ethylen-bis-stearylamid).

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

### Kautschuk

Als Kautschuk werden Polymere bezeichnet, die die Schlagzähigkeit von Polyphenylenethern und/oder von Polyamiden erhöhen. Dabei ist im konkreten Fall der als Komponente verwendete Kautschuk von den verwendeten anderen Komponenten (a), (b), (c), (d) und (f) verschieden. Geeignete Kautschuke, die die Zähigkeit von Polyphenylenethern erhöhen, sind:

Polyoctenylene, Pfropfkautschuke mit einem vernetzten, elastomeren Kern, der beispielsweise von Butadien, Isopren oder Alkylacrylaten abgeleitet ist und einer Pfropfhülle aus Polystyrol, weiterhin Copolymere aus Ethylen und Acrylaten bzw. Methacrylaten sowie die sogenannten Ethylen-Propylen (EP)- und Ethylen-Propylen-Dien (EPDM)-Kautschuke, ferner die mit Styrol gepfropften EP- bzw. EPDM-Kautschuke.

Ferner können Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, eingesetzt werden.

Mischungen aus Blockcopolymeren verschiedener Strukturen, z.B. Mischungen aus Zwei- und Dreiblockcopolymeren oder aus hydrierten und unhydrierten Blockcopolymeren, können ebenfalls eingesetzt werden.

Durch Zugabe der genannten Kautschuke schlagzäh modifizierte Polymere sind an sich bekannt und in der Literatur beschrieben. Nur beispielsweise sei hier auf US 4,085,163, US 3,149,182, US 3,231,635 und US 3,462,162 verwiesen. Auch im Handel sind entsprechende Produkte erhältlich.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:

EP- bzw. EPDM-Kautschuke, die mit den oben genannten funktionellen Gruppen gepfropft wurden. Geeignete Pfropfreagenzien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid auf das Polymer aufgepfropft werden.

Weiterhin seien Copolymere von α-Olefinen genannt. Bei den α-Olefinen handelt es sich üblicherweise um Monomere mit 2 bis 8 Kohlenstoffatomen, vorzugsweise Ethylen und Propylen. Als Comonomere haben sich Alkylacrylate oder Alkylmethacrylate, die sich von Alkoholen mit 1 bis 8 Kohlenstoffatomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymere können in einem Hochdruckprozeß bei einem Druck von 400 bis 4.500 bar oder durch Pfropfen der Comonomere auf das Poly-α-Olefin hergestellt werden. Der Anteil des α-Olefins an dem Copolymer liegt im allgemeinen im Bereich von 99,95 bis 55 Gew.%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich im allgemeinen von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im allgemeinen von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tert.-Butyl(meth-)acrylat, Acrylsäure, Glycidyl(meth)acrylat und Vinyloxazolin. Der Anteil an Monomeren mit funktionellen Gruppen beträgt im allgemeinen 0,1 bis 25 Gew.%, vorzugsweise 0,25 bis 15 Gew.%, bezogen auf das Gesamtgewicht des Kern-Schale-Pfropfkautschuks. Das Gewichtsverhältnis von weichen zu harten Bestandteilen beträgt im allgemeinen 1:9 bis 9:1, bevorzugt 3:7 bis 8:2.

Derartige Kautschuke, die die Zähigkeit von Polyamiden erhöhen, sind an sich bekannt und beispielsweise in der EP 0 208 187 beschrieben.

Selbstverständlich können auch Mischungen verschiedener Kautschuke eingesetzt werden.

### Herstellung der thermoplastischen Formmassen

Die erfindungsgemäßen, gemäß einer Ausführungsform verstärkten, thermoplastischen Formmassen können nach an sich bekannten Verfahren hergestellt werden, indem man die Ausgangskomponenten in üblichen Mischvorrichtungen wie Schneckenextruder, vorzugsweise Zweischneckenextruder, Brabender-Mühlen oder Banbury-Mühlen mischt und anschließend extrudiert. Nach der Extrusion wird das Extrudat abgekühlt und zerkleinert.

Um eine möglichst homogene Formmasse zu erhalten, ist eine intensive Durchmischung vorteilhaft. Die erfindungsgemäßen Formmassen werden üblicherweise wie nachstehend beschrieben hergestellt:

Die Komponenten (a) bis (c), gemäß einer Ausführungsform (d), und wahlweise (e) werden im allgemeinen in der Schmelze bei Temperaturen zwischen 200 und 320°C, vorzugsweise zwischen 250 und 300°C, insbesondere 280°C, auf Extrudern, Walzen oder Knetern, vorzugsweise einem Zweischneckenextruder bei Verweilzeiten von 0,5 bis 10 Minuten aufgeschmolzen und gemischt. Man kann auch Lösungen der Komponenten (b), (a) und (c) oder Teilmischungen davon herstellen und diese vermischen, die Lösungsmittel anschließend entgasen und die Mischungen gemäß einer Ausführungsform der Erfindung mit dem Verstärkungsmittel (d) und ggf. weiteren Zusatzstoffen (e) abmischen und nochmals konfektionieren. Das Vermischen der Komponenten (a), (b) und (c) erfolgt gemäß dieser Ausführungsform vorzugsweise in Gegenwart bzw. unter Zugabe der Verstärkungsmittel (d).

Es ist auch möglich, die Komponente (a) ganz oder teilweise mit mindestens einer anderen Komponente oder dem Verstärkungsmittel (d) vorzumischen.

Ein bevorzugtes Verfahren zur Herstellung der, gemäß einer Ausführungsform der Erfindung verstärkten, thermoplastischen Formmassen ist gekennzeichnet dadurch, daß die Komponenten (a), (b), (c), (d) und ggf. (e) in einem Extruder bei 200 bis 320 °C gemischt werden, wobei Komponente (d) mit Komponente (a) beschichtet wird, die beschichtete Komponente (d) in eine Öffnung eines Extruders eingeführt wird und in dem Extruder mit den geschmolzenen Komponenten (b) und (c) und wahlweise (e) vermischt wird.

Die erfindungsgemäße Formmasse wird besonders bevorzugt in folgender Art hergestellt:

Das funktionalisierte Copolymer der Komponente (a) wird geschmolzen oder gelöst und direkt auf den Glasfaserstrang des Verstärkungsmittels (d) gegeben bzw. dieser mit der Dispersion oder Lösung getränkt und zusammen mit den Glasfasern in eine Öffnung des Extruders in diesen eingetragen und mit der Schmelze der Komponenten (b) und (c) und wahlweise (e) vereinigt, wobei ggf. das Lösungs- oder Dispersionsmittel verdampft bzw. im Vakuum abgezogen wird.

Erfindungsgemäße Massen können auch durch einen Pultrusionsvorgang hergestellt werden, wie er in der EP-A-56 703 beschrieben ist. Dabei wird der Glasfaserstrang mit der Polymermasse durchtränkt und anschließend abgekühlt und zerkleinert. Die Glasfaserlänge ist in diesem Fall identisch mit der Granulatlänge und liegt zwischen 3 und 20 mm.

Die Verweilzeiten betragen im allgemeinen von 0,5 bis 50 Stunden, vorzugsweise 4 bis 24 Stunden.

Anschließend können aus den Formmassen beispielsweise mittels üblicher Vorrichtungen für das Blasformen, Profilextrusion und Rohrextrusion oder Spritzgießen Formkörper hergestellt werden.

Die so hergestellten thermoplastischen Formmassen haben ein ausgewogenes Eigenschaftsprofil, insbesondere eine sehr gute Reißfähigkeit und Fließfähigkeit bei guter Steifheit, insbesondere bei Verwendung des Verstärkungsmittels (d).

Erfindungsgemäß werden deshalb auch Formkörper, insbesondere Spritzgußformteile, Fasern, Filme, bestehend im wesentlichen aus den beschriebenen Formmassen, bereitgestellt.

### Thermoplastische Formmassen, Polyamid enthaltend

Die Aufgaben der vorliegenden Erfindung werden durch die in den Ansprüchen beschriebene, gemäß einer Ausführungsform verstärkte, thermoplastische Formmasse gelöst, die Polyamid enthält.

Diese ist gekennzeichnet durch
(a) 0,1 bis 40 Gew.-% mindestens eines funktionalisierten Copolymers, wie es in einem der Copolymeransprüche definiert ist,
(b) 1 bis 98,9 Gew.-% mindestens eines Polyphenylenethers,
(c) 0 bis 97,9 Gew.-%, mindestens eines vinylaromatischen Polymers,
(d) 0 bis 50 Gew.-% mindestens eines Verstärkungsmittels
(e) 0 bis 60 Gew.-% weiterer Zusatzstoffe und/oder Verarbeitungshilfsmittel und
(f) 1 bis 98,9 Gew.-% mindestens eines Polyamides,
wobei die Mengen der Komponenten (a) bis (f) gemeinsam 100 Gew.-% ergeben.

Vorzugsweise enthalten diese erfindungsgemäßen thermoplastischen Formmassen 0,2 - 35 Gew.-%, insbesondere 5 - 20 Gew.-% der Komponente (a), 1 - 97,9 Gew.-%, besonders bevorzugt 20 - 80 Gew.-%, insbesondere 25 - 50 Gew.-% der Komponente (b), 0 - 50 Gew.-%, insbesondere 0 - 30 Gew.-% der Komponente (c), 1 - 50 Gew.-%, besonders bevorzugt 4 - 45 Gew.-%, insbesondere 10 - 40 Gew.-% der Komponente (d), besonders bevorzugt 0 - 30 Gew.-%, insbesondere 0 - 20 Gew.-% der Komponente (e) und 1 - 97,9 Gew.-%, besonders bevorzugt 15 - 75 Gew.-%, insbesondere 30 - 60 Gew.-% der Komponente (f).

Dabei ergeben die Mengen der Komponenten (a) bis (f) immer gemeinsam 100 Gew.-%.

Die Komponenten (a) bis (e) sind wie vorstehend beschrieben und werden in den hier angegebenen Mengen eingesetzt.

Die Komponente (f) ist nachstehend näher erläutert.

### Polyamide der Komponente (f)

Polyamide der Komponente (f) können thermoplastische teilkristalline Polyamide sein. Die teilkristallinen Polyamide sind in der Regel linear.

Derartige Polyamide können z.B. durch Kondensation äquimolarer Mengen einer gesättigten Dicarbonsäure mit 4 bis 12 Kohlenstoffatomen mit einem Diamin, welches 4 bis 14 Kohlenstoffatome aufweist oder durch Kondensation von ω-Aminocarbonsäuren oder Polyaddition von Lactamen hergestellt werden.

Beispiele für geeignete Polyamide sind Polyhexamethylenadipinsäureamid, Polyhexamethylenazelainsäureamid, Polyhexamethylensebacinsäureamid, Polyhexamethylendodecandisäureamid, Polytetramethylenadipinsäureamid und die durch Ringöffnung von Lactamen erhaltenen Polyamide wie Polycaprolactam und Polylaurinsäurelactam.

Besonders bevorzugt ist ein Polyamid (f) aus der folgenden Gruppe: Polytetramethylenadipinsäureamid, Polyhexamethylenadipinsäureamid, Polyhexamethylensebacinsäureamid, Polycaprolactam, Copolyamide aus Terephthalsäure, Hexamethylendiamin und ε-Caprolactam, Copolyamide aus Terephthalsäure, Isophthalsäure, Hexamethylendiamin und, wahlweise, Adipinsäure, wobei der Anteil der Terephthalsäure und des Hexamethylendiamins zusammen weniger als 50 Gew-%, bezogen auf das Copolyamid, beträgt. Aus dieser Gruppe sind Polyhexamethylenadipinsäureamid und Polycaprolactam besonders bevorzugt. Dabei können auch Mischungen verschiedener Polyamide verwendet werden.

Bevorzugte thermoplastische Formmassen weisen eine Differenz der NH₂- und COOH-Endgruppen der verwendeten Polyamide kleiner 70 mmol/kg, insbesondere kleiner 40 mmol/kg, auf. Besonders bevorzugt sind Endgruppendifferenzen von 10 bis 30 mmol/kg. Die Bestimmung dieser Werte erfolgt nach bekannten Methoden.

Vorzugsweise werden Polyamide mit einer Viskositätszahl von 40 bis 250 ml/g, insbesondere von 40 bis 150 ml/g, gemessen nach DIN 53426, verwendet.

Die Herstellung niedermolekularer Polyamide oder Polyamid-Präpolymere kann z.B. nach den in den EP 0 129 195, EP 0 129 196 und EP 0 299 444 beschriebenen Verfahren erfolgen. Weitere diskontinuierliche und kontinuierliche Herstellungsverfahren sind dem Fachmann bekannt.

Nach einer bevorzugten Arbeitsweise leitet man das niedermolekulare Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird bei etwa 20°C über seinem Schmelzpunkt (im Falle von Polyhexamethylenadipinsäureamid bei etwa 280°C) bevorzugt in einem Doppelschneckenextruder aufgeschmolzen und mit funktionalisiertem Polymer, dem Polyphenylenether sowie gegebenenfalls dem Kautschuk, den Zusatzstoffen oder Verarbeitungshilfsmitteln gemischt, als Strang ausgetragen, gekühlt und granuliert.

Die erfindungsgemäßen thermoplastischen Formmassen, die Polyamid enthalten, können frei sein von vinylaromatischen Polymeren. Gemäß einer Ausführungsform der Erfindung können sie jedoch 0 - 97,9 Gew.-%, vorzugsweise 0 - 50 Gew.-%, insbesondere 0 - 30 Gew.-% mindestens eines vinylaromatischen Polymers Komponente (c) enthalten. Sie können somit Polyphenylenether/Polyamid-Blends oder Polyphenylenether/Polyamid/Vinylaromat-Blends sein.

Die erfindungsgemäßen thermoplastischen Formmassen können nach an sich bekannten Verfahren hergestellt werden, wie es vorstehend für die verstärkten thermoplastischen Formmassen beschrieben ist, außer daß als weitere Komponente (f) jetzt ein Polyamid eingesetzt wird, und auf Komponente (c) verzichtet werden kann gemäß einer Ausführungsform.

Gemäß einer Ausführungsform der Erfindung werden die Komponenten (a) bis (e) vermischt, vorzugsweise in einem Extruder, und Komponente (f) wird danach dem Gemisch der Komponenten (a) bis (e) zudosiert, vorzugsweise in erwärmter Form in einem Seitenextruder. Dabei können die gegebenenfalls vorliegenden Verstärkungsmittel (d), die gegebenenfalls vorbeschichtet sind mit (a) gemäß einer Ausführungsform der Erfindung, dem ersten Gemisch einverleibt werden oder zusammen mit dem Polyamid (f) zudosiert werden.

Die so hergestellten thermoplastischen Formmassen haben ein ausgewogenes Eigenschaftsprofil, insbesondere ein sehr gutes Zähigkeits/Steifigkeits-Verhältnis, insbesondere bei Verwendung des Verstärkungsmittels (d).

Erfindungsgemäß werden auch Formkörper aus den thermoplastischen Formmassen bereitgestellt, die nach dem vorstehend beschriebenen Verfahren hergestellt werden können.

Nachstehend wird in den Beispielen die Erfindung anhand von verstärkten Formmassen näher beschrieben.

### BEISPIELE

### Beispiel 1

Die funktionalisierte Styrol-Butadien-Blockcopolymer-Komponente (a) wurde mit einem mittleren Polystyrol-Molekulargewicht von 29.000 und einem mittleren Polybutadien-Molekulargewicht von 36.000 eingesetzt (a1). Eine zweite Komponente (a) wies ein mittleres Polystyrol-Molekulargewicht von 57.000 und ein mittleres Polybutadien-Molekulargewicht von 65.000 auf (a2), jeweils Mₙ. Beide Styrol-Butadien-Blockcopolymere trugen Anhydrid-Endgruppen und wurden wie nachstehend beschrieben hergestellt.

Das funktionalisierte Blockcopolymer (a1) wurde folgendermaßen hergestellt: 3.200 ml trockenes Cyclohexan und 0,3 ml 1,1-Diphenylethylen wurden in einem inertisierten 6 l Rührkessel vorgelegt. Sodann wurde 1,5 molare sekundäre Butyllithium-Lösung (in Cyclohexan/Isopentan 92/8) zugegeben, bis eine Rotfärbung bestehen blieb. Danach wurden noch weitere 8 ml der Butyllithium-Lösung zugegeben. Anschließend wurden 400 ml hochreines Styrol bei 60 °C innerhalb von 2 Stunden zugetropft. Nach einer weiteren Stunde Nachrühren wurden 548 ml gereinigtes Butadien zugetropft. Danach wurde nochmals eine Stunde nachgerührt. Schließlich wurden 7 ml 1,1-Diphenylethylen zugegeben, woraufhin nochmals eine halbe Stunde nachgerührt und schließlich auf 20 °C abgekühlt wurde. In einem weiteren inertisierten 6 l Rührkessel wurden währenddessen 30 g Trimellitsäureanhydridchlorid in 300 ml trockenem Tetrahydrofuran vorgelegt und auf 0 °C abgekühlt. Daraufhin wurde der Inhalt des ersten Rührkessels innerhalb von 1 bis 2 Stunden zugetropft. Nach Ablauf einer Nachreaktionszeit von 1 Stunde wurde das entstandene Styrol-Butadien-Blockcopolymer mit Petrolether ausgefällt, abgesaugt und getrocknet. Das so hergestellte Anhydrid-modifizierte Blockcopolymer hatte ein mittleres Molekulargewicht (GPC in CHCl₃ gegen Polystyrol-Eichstandards) von 65.000 (Mₙ).

Das funktionalisierte Blockcopolymer (a2) wurde in derselben Weise hergestellt, abgesehen von der Verwendung von 4,5 statt 8 ml einer 1,5 molaren sekundären Butyllithium-Lösung als Initiator. Das mittlere Molekulargewicht der erhaltenen funktionalisierten Styrol-Butadien-Blockcopolymere betrug dabei 122.000 (Mₙ).

Der Funktionalisierungsgrad der funktionalisierten Polymere (a1) und (a2) wurde bestimmt durch ¹H-NMR.

Dabei ergaben sich folgende Funktionalisierungsgrade:
(a1) 90%
(a2) 85%

### Beispiel 2

Zu Vergleichszwecken wurden funktionalisierte Blockcopolymere (a3) und (a4) hergestellt in Anlehnung an die bei Barlow und Paul beschriebene "indirekte Funktionalisierungsmethode" für Polystyrol (a.a.O.). Diese nicht erfindungsgemäßen funktionalisierten Styrol-Butadien-Blockcopolymere wurden also ohne Diphenylethylen hergestellt. Beide Styrol-Butadien-Blockcopolymere (a3) und (a4) trugen Anhydrid-Endgruppen. Polymer (a3) wies ein mittleres Polystyrol-Molekulargewicht von 30 000 und ein mittleres Polybutadien-Molekulargewicht von 30 000 auf (Mₙ). Der Funktionalisierungsgrad betrug 30%.

Das andere Polymer (c4) wies ein mittleres Polystyrol-Molekulargewicht von 60 000 und ein mittleres Polybutadien-Molekulargewicht von 60 000 auf (jeweils Mₙ). Der Funktionalisierungsgrad betrug 25%.

Der Funktionalisierungsgrad der funktionalisierten Polymere (c3) und (c4) wurde bestimmt durch ¹H-NMR.

### Beispiel 3

Als weiteres Vergleichspolymer wurde ein in Lösung durch radikale Polymerisation hergestelltes Styrol-Maleinsäure-Anhydrid-Copolymer als Blockcopolymer-Komponente (a5) hergestellt. Dieses Polymer wies einen Maleinsäure-Anhydrid-Gehalt von 2,5 Gew.-% auf.

### Beispiel 4 - 24 Formmassen

Als Komponente (b) wurde Poly-2,6-dimethyl-1,4-phenylenether mit einer intrinsischen (relativen) Viskosität von 0,55 dl/g, gemessen in einer Konzentration von etwa 1 Gew.-% in Chloroform bei 25 °C, verwendet.

Als Komponente (c) kamen drei Polystyrole zum Einsatz:
(c1) ist ein schlagfestes Polystyrol KR2756 der BASF AG mit einem Gehalt von 8 Gew.-% Butadien und einem Schmelzindex von 3 g/10 Minuten, gemessen nach DIN 53735 bei 200 °C und 5 kg Last.
(c2) ist ein Standardpolystyrol 148 H der BASF AG mit folgenden Eigenschaften:
   VST/B/50(ISO 306) = 101°C
   MVR 200/5(ISO 1133) = 4,5
(c3) ist ein Copolymerisat aus 95 Gew.-% Styrol und 5 Gew.-% tert.-Butylacrylat mit einer VZ von 1,0 dl/g. Es wurde nach dem in EP-A-0 319 833 für die Komponente B beschriebenen Verfahren hergestellt, vgl. S. 6, Zeile 57 ff.

Als Komponente (d) wurden folgende Glasfasern verwendet:

Als Komponente (d1) wurde eine Schnittglasfaser verwendet, die einen mittleren Faserdurchmesser von 14 µm und eine Aminosilanschlichte aufwies, beispielsweise erhältlich unter der Bezeichnung OCF^{R}R 44DX2 von Owens Corning Fiberglass Corp.

Als Komponente (d2) wurde die Schnittglasfaser 5145EC14 von Vetrotex International S.A. verwendet, die einen Durchmesser von 1µm und eine Silanschlichte aufwies.

Als Komponente (e) wurde eine Kautschuk-Komponente verwendet, die aus einem Styrol-Butadien-4-Blockcopolymer mit einem Styrolgehalt von 41 Gew.-% und einer Shore A-Härte von 87 (nach DIN 53505) bestand.

Als Polyamid (f) wurde Polyamid 66 mit einer Viskosität von 144 ml/g verwendet.

### Herstellung der Formmassen

Die Komponenten (a), (b), (c), (d), (e) und (f), sofern vorhanden, wurden nach den in Tabellen 1, 3 und 5 angegebenen Gewichtsteilen in allen Beispielen auf einem Zweiwellenextruder, der mit 200 U/min lief, konfektioniert. Die Temperatur betrug dabei 280 °C. Es wurden 20 kg pro Stunde verarbeitet. Die Formmasse wurde nach dem Extrudieren granuliert und schließlich zu den entsprechenden Formkörpern im Spritzgußverfahren bei 280 °C verarbeitet.

Die Fließfähigkeit (melt volume rate, MVR 250 °C/21,6 kg), gemessen nach DIN 53 735, die Reißfestigkeit (Reißdehnung), gemessen nach DIN 53 455 und das Elastizitätsmodul, gemessen nach DIN 53 457 und die Kerbschlagzähigkeit, gemessen nach DIN 53 453, sind in den Tabellen angegeben, sofern sie bestimmt wurden.

In den nachstehenden Tabellen 1 und 2 werden erfindungsgemäße Formmassen aus funktionalisiertem Copolymer (a), Polyphenylenether (b), vinylaromatischem Polymer (c) und Verstärkungsmittel (d) mit Vergleichsmassen verglichen, die kein funktionalisiertes Copolymer (a) aufweisen.

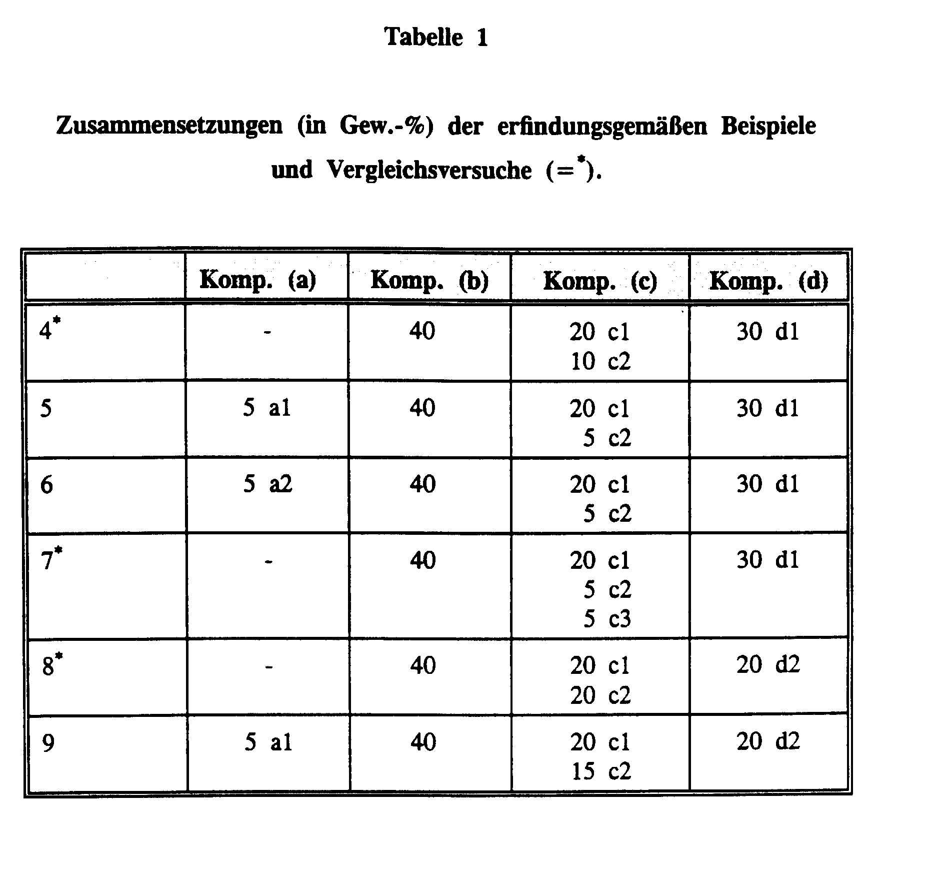

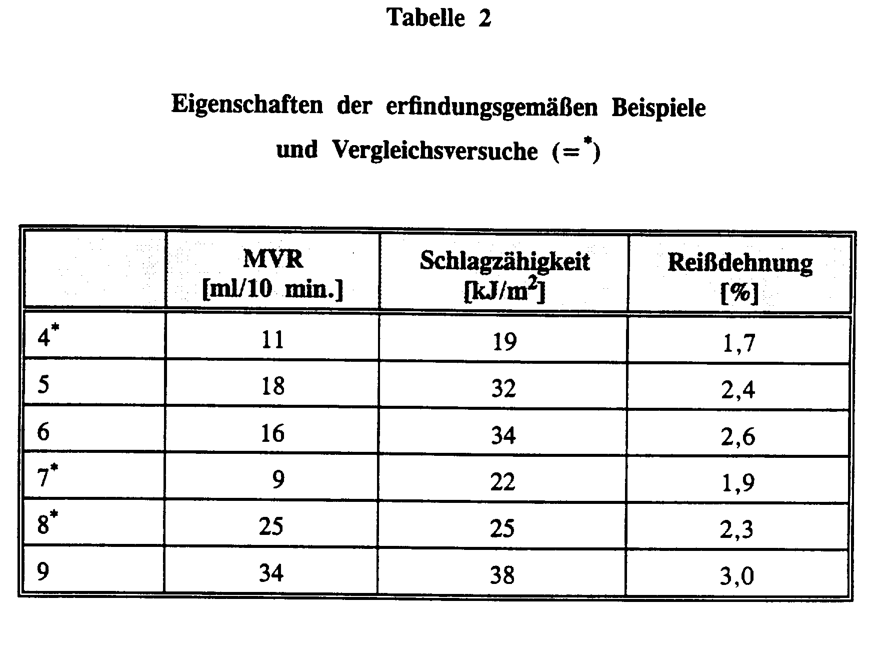

Aus der Tabelle 2 ergibt sich, daß die erfindungsgemäßen verstärkten thermoplastischen Formmassen zugleich hohe Fließfähigkeit, Reißdehnung und Schlagzähigkeit besitzen, im Gegensatz zu den Polymeren der Vergleichsbeispiele, die entweder eine hohe Fließfähigkeit, aber geringe Schlagzähigkeit und Reißdehnung aufweisen, oder aber eine schlechte Fließfähigkeit und eine schlechte Reißdehnung bei vertretbarer Schlagzähigkeit besitzen. Die erfindungsgemäßen Beispiele 5, 6 und 9 zeigen allesamt einen deutlichen Vorteil gegenüber den Vergleichsbeispielen 4, 7 und 8.

In den nachstehenden Tabellen 3 und 4 werden erfindungsgemäße Formmassen, die ein funktionalisiertes Copolymer (a), einen Polyphenylenether (b), mindestens ein vinylaromatisches Polymer (c) und Verstärkungsmittel (d) enthalten mit solchen verglichen, die gemäß Barlow und Paul hergestellte Vergleichskomponenten (a3) und (a4) mit niedrigem Funktionalisierungsgrad enthalten.

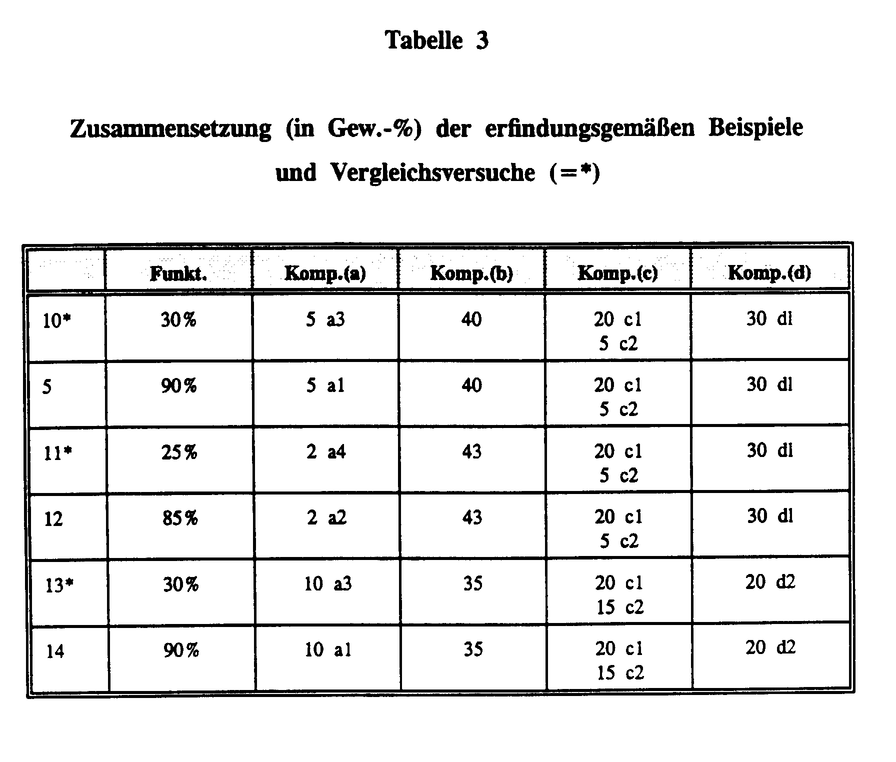

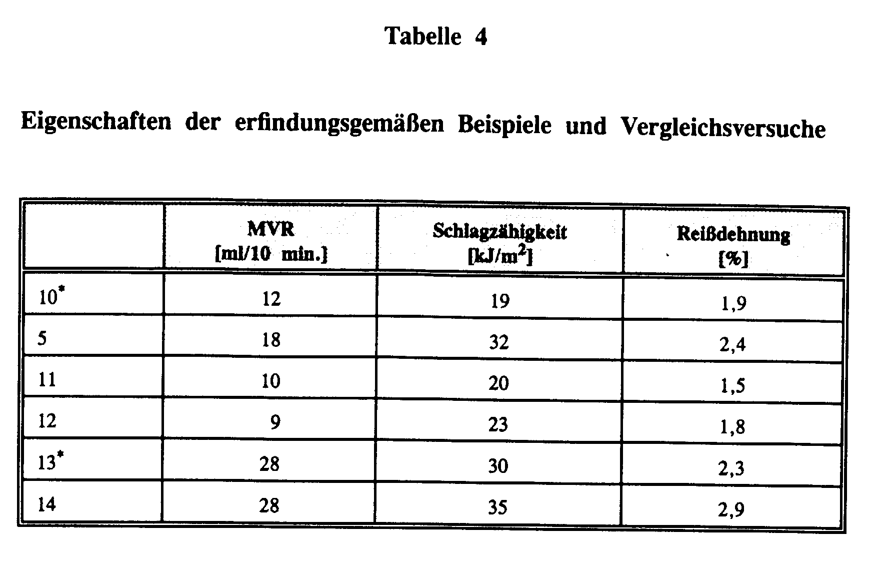

Aus der Tabelle 4 ergibt sich, daß die erfindungsgemäßen Formmassen mit einem funktionalisierten Copolymer (a) mit hohem Funktionalisierungsgrad eine wesentlich höhere Schlagzähigkeit und Reißdehnung aufweisen in Vergleich zu Vergleichsformmassen, die ein funktionalisiertes Copolymer (a) mit geringem Funktionalisierungsgrad aufweisen.

In den nachstehenden Tabellen 5 und 6 sind erfindungsgemäße Formmassen, die ein funktionalisiertes Copolymer (a), einen Polyphenylenether (b), einen Kautschuk (e) und ein Polyamid (f) enthalten, mit solchen Vergleichsmassen verglichen, die als Komponente (a5) ein nicht funktionalisiertes Styrol-Maleinsäureanhydrid-Copolymer enthalten.

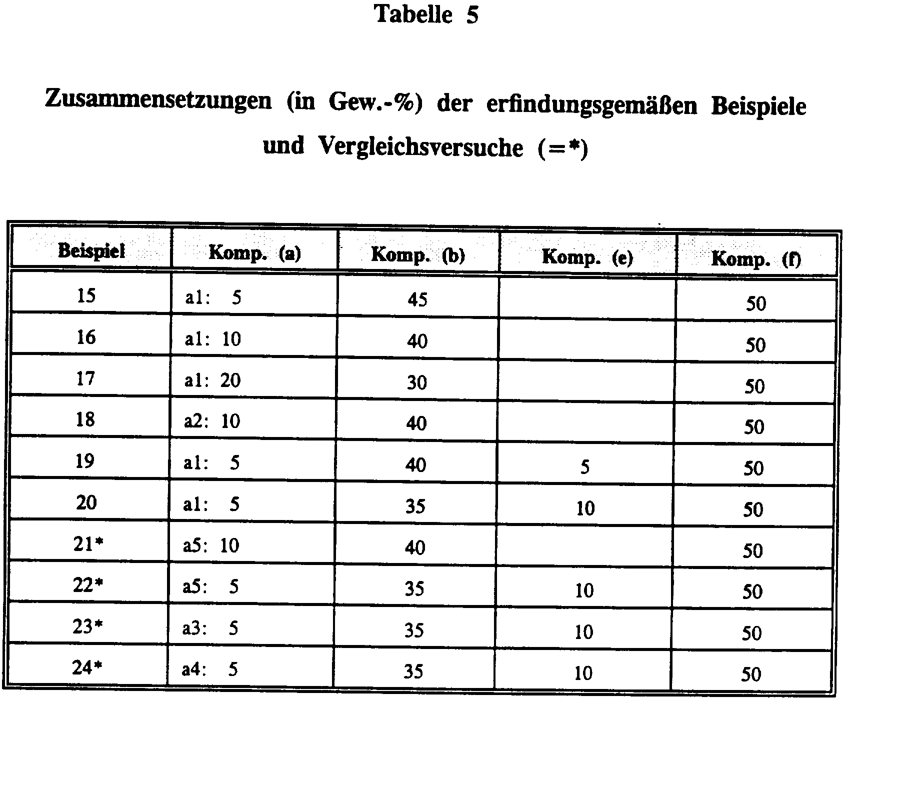

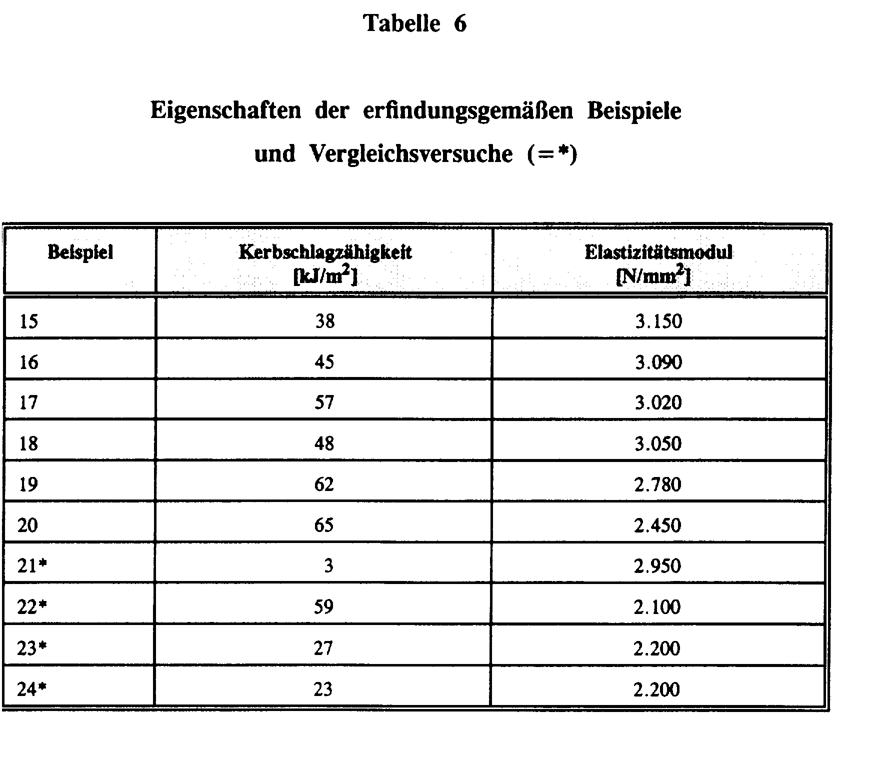

Aus den Tabellen ergibt sich, daß die erfindungsgemäßen thermoplastischen Formmassen zugleich hohe Zähigkeit und Steifigkeit besitzen, im Gegensatz zu Vergleichsformmassen, die entweder einen hohen Elastizitätsmodul und geringe Kerbgschlagzähigkeit, oder aber hohe Kerbschlagzähigkeit und einen niedrigeren Elastizitätsmodul aufweisen. Die erfindungsgemäßen Beispiele 15 bis 20 zeigen allesamt einen deutlichen Unterschied zu den Vergleichsbeispielen 21 bis 24.

## Patentansprüche

1. Funktionalisiertes Copolymer der Formel
A―B―Z―X
wobei
A einen Block aus vinylaromatischen Monomeren mit 8 bis 20, vorzugsweise 8 bis 12 Kohlenstoffatomen,
B einen Block aus Alkadien-Monomeren mit 4 bis 12, vorzugsweise 4 bis 8 Kohlenstoffatomen,
Z einen Grundbaustein einer Verbindung mit sterisch hindernden Gruppen und
X einen funktionalisierten Grundbaustein
bedeutet.

2. Funktionalisiertes Copolymer nach Anspruch 1, wobei A einen Block aus Styrol und/oder α-Methylstyrol und B einen Block aus Butadien und/oder Isopren bedeutet.

3. Funktionalisiertes Copolymer nach Anspruch 1 oder 2, wobei Z einen Grundbaustein der Formel 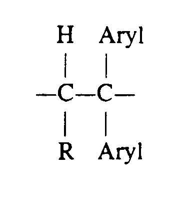 bedeutet, wobei R einen Kohlenwasserstoffrest, vorzugsweise einen Alkylrest mit 1 bis 4 Kohlenstoffatomen oder Wasserstoff, und "Aryl" einen Arylrest mit 6 bis 10 Kohlenstoffatomen bedeutet.

4. Funktionalisiertes Copolymer nach einem der Ansprüche 1 bis 3, wobei der funktionalisierte Grundbaustein eine endständige Säureanhydridgruppe oder Aminogruppe enthält.

5. Funktionalisiertes Copolymer nach einem der Ansprüche 1 bis 4, wobei der Funktionalisierungsgrad des Copolymers mindestens 35%, vorzugsweise mindestens 65%, besonders bevorzugt mindestens 85%, beträgt.

6. Verfahren zur Herstellung eines funktionalisierten Copolymers gemäß einem der Polymeransprüche, wobei
a) vinylaromatische Monomere und Alkadien-Monomere anionisch zu einem ersten lebenden, einen Block A und einen Block B enthaltenden Copolymer der Formel A―B⁻ polymerisiert werden,
b) das erste lebende Copolymer mit einer Verbindung mit sterisch hindernden Gruppen zu einem zweiten lebenden Copolymer der Formel A―B―Z^{^{⊖}} umgesetzt wird und
c) das zweite lebende Copolymer mit einer funktionellen Gruppe einer mindestens difunktionellen Verbindung zu einem Copolymer der Formel A―B―Z―X umgesetzt wird, wobei die hier verwendeten Abkürzungen die gleiche Bedeutung wie in den Polymeransprüchen haben.

7. Verwendung eines funktionalisierten Copolymers gemäß einem der Copolymeransprüche zur Herstellung von, gegebenenfalls verstärkten, thermoplastischen Formmassen.

8. Thermoplastische Formmassen, enthaltend
(a) 0,1 bis 20 Gew.-% mindestens eines funktionalisierten Copolymers, wie es in einem der Copolymeransprüche definiert ist,
(b) 1 bis 98,9 Gew.-% mindestens eines Polyphenylenethers,
(c) 1 bis 98,9 Gew.-% mindestens eines vinylaromatischen Polymers,
(d) 0 bis 50 Gew.-% mindestens eines Verstärkungsmittels, und
(e) 0 bis 60 Gew.-% weiterer Zusatzstoffe und/oder Verarbeitungshilfsmittel,
wobei Mengen der Komponenten (a) bis (e) gemeinsam 100 Gew.-% ergeben.

9. Verfahren zur Herstellung von, gegebenenfalls verstärkten, thermoplastischen Formmassen gemäß Anspruch 8, wobei die Komponenten (a), (b), (c), (d) und (e), sofern vorhanden, in einem Extruder bei 200 bis 320 °C gemischt werden, wobei gegebenenfalls Komponente (d) mit Komponente (a) beschichtet wird, die beschichtete Komponente (d) in eine Öffnung eines Extruders eingeführt wird und in dem Extruder mit den geschmolzenen Komponenten (b) und (c) und wahlweise (e) vermischt wird.

10. Thermoplastische Formmassen, enthaltend
(a) 0,1 bis 40 Gew.-% mindestens eines funktionalisierten Copolymers, wie es in einem der Copolymeransprüche definiert ist,
(b) 1 bis 98,9 Gew.-% mindestens eines Polyphenylenethers,
(c) 0 bis 97,9 Gew.-% mindestens eines vinylaromatischen Polymers,
(d) 0 bis 50 Gew.-% mindestens eines Verstärkungsmittels, und
(e) 0 bis 60 Gew.-% weiterer Zusatzstoffe und/oder Verarbeitungshilfsmittel und
(f) 1 bis 98,9 Gew.-% mindestens eines Polyamides,
wobei die Mengen der Komponenten (a) bis (f) gemeinsam 100 Gew.-% ergeben.

11. Verfahren zur Herstellung von, gegebenenfalls verstärkten, thermoplastischen Formmassen gemäß Anspruch 10, wobei die Komponenten (a), (b), (c), (d), (e) und (f), sofern vorhanden, in einem Extruder bei 200 bis 320°C gemischt werden, wobei Komponente (f) in einer Öffnung eines Extruders eingeführt wird und in dem Extruder mit den geschmolzenen Komponenten (a), (b), (c), (e) vermischt wird, wobei Komponente (d) mit Komponente (f) und/oder mit Komponente (a), (b), (c) und (e) vermischt sein kann.

12. Verwendung von thermoplastischen Formmassen gemäß Anspruch 8 oder 10 zur Herstellung von Formkörpern.

13. Formkörper, umfassend Formmassen gemäß Anspruch 8 oder 10.

## Claims

1. A functionalized copolymer of the formula
A-B-Z-X
where
A is a block of vinylaromatic monomers of 8 to 20, preferably 8 to 12, carbon atoms,
B is a block of alkadiene monomers of 4 to 12, preferably 4 to 8, carbon atoms,
Z is a fundamental building block of a compound having sterically hindering groups and
X is a functionalized fundamental building block.

2. A functionalized copolymer as claimed in claim 1, wherein A is a block of styrene and/or α-methylstyrene and B is a block of butadiene and/or isoprene.

3. A functionalized copolymer as claimed in claim 1 or 2, wherein Z is a fundamental building block of the formula 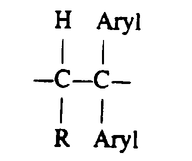 where R is a hydrocarbon radical, preferably alkyl of 1 to 4 carbon atoms, or hydrogen and Aryl is aryl of 6 to 10 carbon atoms.

4. A functionalized copolymer as claimed in any of claims 1 to 3, wherein the functionalized fundamental building block contains a terminal acid anhydride group or amino group.

5. A functionalized copolymer as claimed in any of claims 1 to 4, wherein the degree of functionalization of the copolymer is at least 35%, preferably at least 65%, particularly preferably at least 85%.

6. A process for the preparation of a functionalized copolymer as claimed in any of the polymer claims, wherein
a) vinylaromatic monomers and alkadiene monomers are subjected to anionic polymerization to give a first living copolymer of the formula A-B⁻ containing a block A and a block B,
b) the first living copolymer is reacted with a compound having sterically hindering groups to give a second living copolymer of the formula A-B-Z^{⊖} and
c) the second living copolymer is reacted with a functional group of a difunctional or polyfunctional compound to give a copolymer of the formula A-B-Z-X, the abbreviations used here having the same meaning as in the polymer claims.

7. The use of a functionalized copolymer as claimed in any of the copolymer claims for the preparation of unreinforced or reinforced, thermoplastic molding materials.

8. A thermoplastic molding material containing
(a) from 0.1 to 20% by weight of at least one functionalized copolymer as defined in any of the copolymer claims,
(b) from 1 to 98.9% by weight of at least one polyphenylene ether,
(c) from 1 to 98.9% by weight of at least one vinylaromatic polymer,
(d) from 0 to 50% by weight of at least one reinforcing agent and
(e) from 0 to 60% by weight of further additives and/or processing assistants,
the amounts of the components (a) to (e) together being 100% by weight.

9. A process for the preparation of unreinforced or reinforced, thermoplastic molding materials as claimed in claim 8, wherein the components (a), (b), (c), (d) and (e), if present, are mixed in an extruder at from 200 to 320°C, if required component (d) being coated with component (a), and the coated component (d) being introduced into an orifice of an extruder and being mixed in the extruder with the molten components (b) and (c) and, if required, (e).

10. A thermoplastic molding material containing
(a) from 0.1 to 40% by weight of at least one functionalized copolymer as defined in any of the copolymer claims,
(b) from 1 to 98.9% by weight of at least one polyphenylene ether,
(c) from 0 to 97.9% by weight of at least one vinylaromatic polymer,
(d) from 0 to 50% by weight of at least one reinforcing agent and
(e) from 0 to 60% by weight of further additives and/or processing assistants and
(f) from 1 to 98.9% by weight of at least one polyamide,
the amounts of the components (a) to (f) together being 100% by weight.

11. A process for the preparation of unreinforced or reinforced, thermoplastic molding materials as claimed in claim 10, wherein the components (a), (b), (c), (d), (e) and (f), if present, are mixed in an extruder at from 200 to 320°C, component (f) being introduced into an orifice of an extruder and being mixed in the extruder with the molten components (a), (b), (c) and (e), and it being possible for component (d) to be mixed with component (f) and/or with components (a), (b), (c) and (e).

12. The use of a thermoplastic molding material as claimed in claim 8 or 10 for the production of moldings.

13. A molding comprising a molding material as claimed in claim 8 or 10.

## Revendications

1. Copolymère fonctionnalisé de la formule :
A―B―Z―X
dans laquelle
A représente un bloc de monomères vinylaromatiques comportant 8 à 20, de préférence 8 à 12, atomes de carbone,
B représente un bloc de monomères d'alcadiène comportant 4 à 12, de préférence 4 à 8, atomes de carbone,
Z représente un élément constitutif fondamental d'un composé présentant des groupes à empêchement stérique, et
X représente un élément constitutif fondamental fonctionnalisé.

2. Copolymère fonctionnalisé suivant la revendication 1, dans lequel A représente un bloc de styrène et/ou d'α-méthylstyrène et B un bloc de butadiène et/ou d'isoprène.

3. Copolymère fonctionnalisé suivant l'une des revendications 1 et 2, dans lequel Z représente un élément constitutif fondamental de la formule : 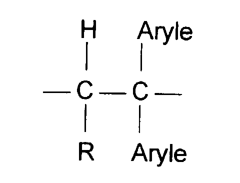 dans laquelle R représente un radical d'hydrocarbure, de préférence un radical alkyle comportant 1 à 4 atomes de carbone, ou de l'hydrogène, et "aryle" représente un radical aryle comportant 6 à 10 atomes de carbone.

4. Copolymère fonctionnalisé suivant l'une des revendications 1 à 3, dans lequel l'élément constitutif fondamental fonctionnalisé contient un groupe terminal d'anhydride d'acide ou amino.

5. Copolymère fonctionnalisé suivant l'une des revendications 1 à 4, dans lequel le degré de fonctionnalisation du copolymère est d'au moins 35%, de préférence d'au moins 65%, particulièrement avantageusement d'au moins 85%.

6. Procédé de préparation d'un copolymère fonctionnalisé suivant l'une des revendications de polymère, dans lequel
a) on polymérise des monomères vinylaromatiques et des monomères d'alcadiène de façon anionique en un premier copolymère vivant de la formule A―B⁻ contenant un bloc A et un bloc B,
b) on fait réagir le premier copolymère vivant avec un composé qui présente des groupes à empêchement stérique en un deuxième copolymère vivant de la formule A―B―Z^{⊖} et
c) on fait réagir le deuxième copolymère vivant avec un groupe fonctionnel d'un composé au moins difonctionnel pour former un copolymère de la formule A―B―Z―X, les symboles ici utilisés ayant la même signification que dans les revendications de polymère.

7. Utilisation d'un copolymère fonctionnalisé suivant l'une des revendications de copolymère pour la préparation de masses à mouler thermoplastiques, éventuellement renforcées.

8. Masses à mouler thermoplastiques, contenant
(a) 0,1 à 20% en poids d'au moins un copolymère fonctionnalisé, tel qu'il est défini dans une des revendications de copolymère,
(b) 1 à 98,9% en poids d'au moins un éther de polyphénylène,
(c) 1 à 98,9% en poids d'au moins un polymère vinylaromatique,
(d) 0 à 50% en poids d'au moins un agent de renforcement, et
(e) 0 à 60% en poids d'autres additifs et/ou agents auxiliaires de traitement,
les quantités des composants (a) à (e) formant ensemble 100% en poids.

9. Procédé de préparation de masses à mouler thermoplastiques, éventuellement renforcées, suivant la revendication 8, dans lequel les composants (a), (b), (c), (d) et (e), dans la mesure où ils sont présents, sont mélangés dans une extrudeuse à 200 jusqu'à 320°C, le composant (d) étant revêtu éventuellement du composant (a), le composant revêtu (d) étant introduit dans une ouverture d'une extrudeuse et étant, dans l'extrudeuse, mélangé aux composants fondus (b) et (c) et au choix (e).

10. Masses à mouler thermoplastiques, contenant
(a) 0,1 à 40% en poids d'au moins un copolymère fonctionnalisé, tel qu'il est défini dans l'une des revendications de copolymère,
(b) 1 à 98,9% en poids d'au moins un éther de polyphénylène,
(c) 0 à 97,9% en poids d'au moins un polymère vinylaromatique,
(d) 0 à 50% en poids d'au moins un agent de renforcement, et
(e) 0 à 60% en poids d'autres additifs et/ou agents auxiliaires de traitement, et
(f) 1 à 98,9% en poids d'au moins un polyamide,
les quantités des composants (a) à (f) formant ensemble 100% en poids.

11. Procédé de préparation de masses à mouler thermoplastiques, éventuellement renforcées, suivant la revendication 10, dans lequel les composants (a), (b), (c), (d), (e) et (f), dans la mesure où ils sont présents, sont mélangés dans une extrudeuse à 200 jusqu'à 320°C, le composant (f) étant introduit dans une ouverture d'une extrudeuse et étant, dans l'extrudeuse, mélangé aux composants fondus (a), (b), (c), (e), le composant (d) pouvant être mélangé au composant (f) et/ou aux composants (a), (b), (c) et (e).

12. Utilisation de masses à mouler thermoplastiques suivant l'une des revendications 8 et 10 pour la préparation de corps moulés.

13. Corps moulés, comportant des masses à mouler suivant l'une des revendications 8 et 10.
